# EUROPEAN PATENT SPECIFICATION

(11) **EP 3 822 433 B1**
(45) Date of publication and mention of the grant of the patent: **29.01.2025**
(21) Application number: 20208515.5
(22) Date of filing: 18.11.2020
(51) Int. Cl.: E05B 19/00, E05B 27/00

(54) **KEY, CYLINDER LOCK, SYSTEM AND METHOD**
SCHLÜSSEL, ZYLINDERSCHLOSS, SYSTEM UND VERFAHREN
CLÉ, SERRURE À CYLINDRE, SYSTÈME ET MÉTHODE

(30) Priority: 18.11.2019 CH 14582019
(43) Date of publication of application: 19.05.2021
(73) Proprietor: SEA Schliess-Systeme AG, 3052 Zollikofen (CH)
(72) Inventor: Tahiri, Fatmir, 3302 Moosseedorf (CH); Grossenbacher, Andreas, 3613 Steffisburg (CH)
(74) Representative: Vesterinen, Jussi Tapio

(56) References cited:
- WO-A1-2004/048724
- WO-A1-2014/032191
- DE-U1- 202009 011 052
- NL-A- 6 606 735
- US-B2- 9 151 077

## Description

### Field of the invention

The invention relates to cylinder locks and keys for use in cylinder locks. The invention relates in particular to flat-bladed keys with recesses whose geometric properties can be coded to match corresponding geometric properties of the pins of the cylinder lock(s) which the keys are designed to operate.

### Background of the invention

It is known to manufacture flat-bladed keys with recesses, each of which is coded to interact with a particular pin of the cylinder lock. A cylinder lock may comprise a cylindrical rotor coaxial with a surrounding stator. Pins in the rotor engage with the recesses to block or permit rotation of the rotor in the stator. For each coding location on the key, a rotor pin may be provided, which rotates with the rotor, and a displacement mechanism, usually part of the stator, urges the pin into contact with the recess of the key when the key is inserted in the channel of the rotor. Two-part pins each have a rotor part, located in a radial hole in the rotor, and a stator part, located in a radial hole in the stator. The stator part is spring-biased towards the centre of the rotor. The length of the rotor part of the pin is such that, when the pin engages with a corresponding recess of the correct depth, the two parts of the pin meet each other at the rotor/stator interface, so that the rotor is free to rotate. When the length (coding) of the rotor part does not match the depth (coding) of the corresponding recess, the two parts of the pin meet each other at a radial distance inward or outward of the rotor/stator interface, such that the rotor is blocked from rotation.

### Prior art

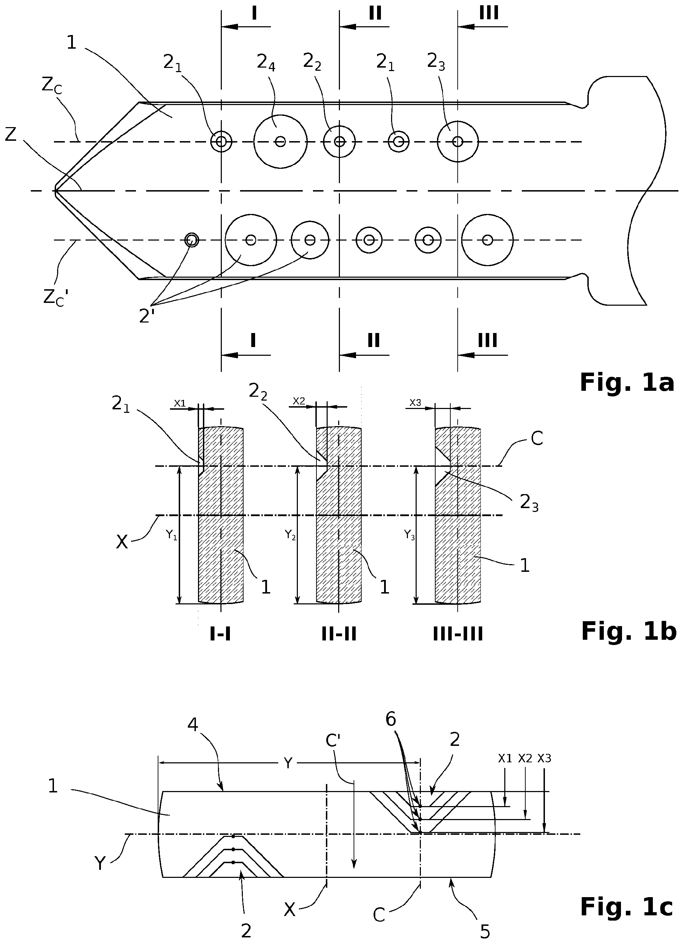

An example of a prior art key blade is shown in figures 1a to 1c. Figure 1a shows a flat key blade 1 having a longitudinal (axial) axis Z, a thickness (depth) axis X and a height (transverse) axis Y. The figures 1a to 1c show multiple recesses 2₁, 2₂, 2₃, 2₄, 2' in two rows, with the recess centres aligned along axes Z_{C} and Z_{C}', and with each recess having one of several discrete codings. The codings may be formed by moving a suitable machining tool, perpendicularly to the key blade, to one of the pre-set coding depths X₁, X₂, X₃. Figure 1a shows five recesses along axis Z_{C}, the five recesses having four different depths. In figure 1b, cross-sections III-III, II-II and I-I (viewed from the bow end of the key blade 1) are shown through the first, third and fifth recesses (ordinal numbering from the bow end of the blade), which have codings 2₃, 2₂ and 2₁ respectively with depths X₃, X₂ and X₁ respectively and a common Y location (all five recesses are centred on axis Z_{C}). Coding is determined by the position of each recess along the coding axis C, perpendicular to the blade face 4, 5, or along a coding direction C' parallel to the coding axis C. Figure 1c shows a schematic cross-section in which three recess sizes are shown superposed. Each recess has a surface contact point 6 where the tip of a pin of the cylinder lock makes contact. Figure 1c also shows how the key can be made reversible by forming the same coding recesses 2, reversed, on each face 4, 5 of the blade 1.

In the type of key shown in figures 1a to 1c, the geometry of the coding scheme is easily understandable, and the key may be copied by taking relatively straightforward measurements for each recess. The copier can readily identify the defining characteristics of the functional (coding) surfaces and the contact points 6, and this may enable him or her to deduce the coding scheme and to forge unauthorised copies of the keys.

It is known to arrange cylinder lock pins at an angle to the plane of the key channel. In Swiss patent CH449455, angled pins are provided as supplementary security. These engage with special side-recesses, formed as additional lateral recesses off the side of the principal coding recesses. In EP0313864A2, angled pins with correspondingly angled recesses are drilled into a profiled key, so that the pin tips contact the bottom surfaces of the drilled holes. Drilling at an angle into such a profiled surface is difficult to control and therefore results in recesses of low precision. In FR2465051A1, pins and their corresponding coding recesses are slightly angled from the perpendicular. The coding is nevertheless similar to that described above in relation to figures 1a to 1c; recess coding is defined only by the depth of the recess. German utility model DE29711144U1 discloses the use of angled pins with recesses drilled into a profiled key blade, where the rotary freedom of the lock cylinder depends on the presence or absence of a drilled recess at the location of the angled pin. European patent application EP1185755 describes a flat-bladed key with a hole drilled at an angle to the flat surface to receive an angled pin. DE202009011052U1 discloses another angled-pin solution in a locking cylinder. US2015013404B2 concerns a key whose blade comprises axially a window forming an opening throughout the thickness of the blade between two opposite faces thereof, and a set of rollers mounted in series along said windows with each roller being mounted freely rotating around a spindle fixed transversal to the window. WO2014032191A1 relates to a blank having two parallel lateral grooves and a central connecting piece between said grooves. As mentioned above, it is difficult to drill a hole at an angle to a surface precisely.

For a given blade length or area, existing reversible flat-bladed keys provide coding regions for a limited number of pins with a limited number of coding permutations. There is a need for a key which is easy to manufacture and precisely coded, and which, for a given key blade length or area, facilitates a greater number of coding permutations, and/or a greater number of recesses for engagement with a greater number of pins. Put another way, there is a need for a key which has a greater density of pin engagements for a particular blade length or area. There is also a need for coding schemes which are more difficult to decode, measure and/or copy, and for keys coded with such schemes, and for locks for such keys.

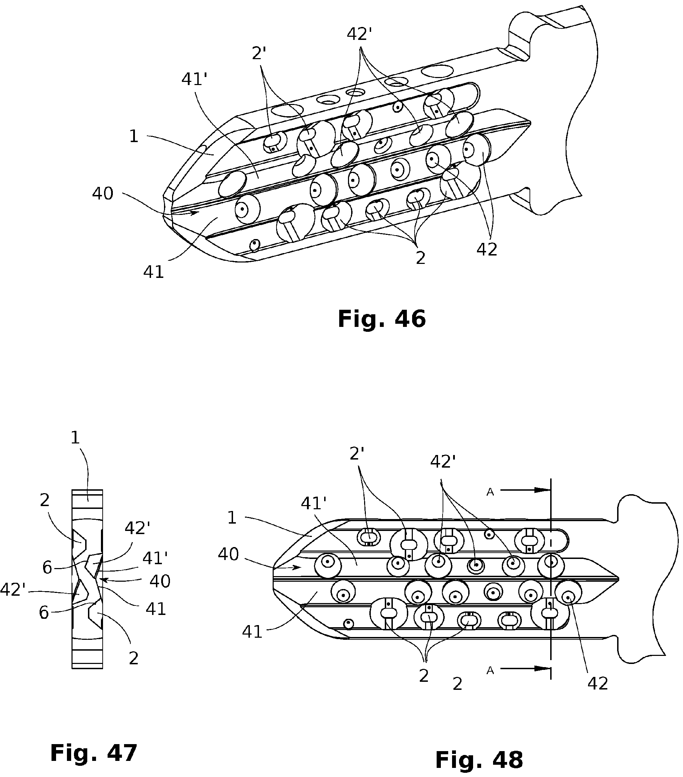

The present disclosure is intended to be read in conjunction with the co-pending patent application with the title "Key blank, key, lock and method", filed by the same applicant on the same date as the present specification. In particular, the teachings of the co-pending application which relate to the detail of the valley recesses and grooves and their variants are explicitly referred to as additional detail of the valley recesses and grooves of the variants relating to figures 46 to 51 and 53 of the present application, however, they do not form part of the claimed invention.

### Brief description of the invention

The present invention aims to overcome at least some of the disadvantages of prior art keys and lock systems. To this end, a key according to the invention is described in claim 1, a cylinder lock according to the invention is set out in claim 10, and a coding method according to the invention is set out in claim 12, and a lock system according to claim 15. Further variants of the invention are described in the dependent claims.

By providing angled lateral flanks of coding recesses for coded engagement with the cylinder lock pins, and by arranging the recesses so that differently-coded recesses are located at a different position along an inclined coding axis, the invention enables the coding recesses to be cut by machining perpendicularly to the blade surface (thereby permitting greater machining precision of the critical coding surfaces), while providing increased coding flexibility and making the task of a would-be key-copier more difficult because the critical coding dimensions are less easy to identify and measure. As well as the Z-position coding, the C-direction recess coding may be defined by the transverse location Y of the pin contact region (with or without varying the recess depth X) instead of merely varying the single depth component (X) as in the prior art. The C-coded recess arrangement permits a greater density of recesses on the key and a greater density of pins in the rotor of the cylinder lock. As a consequence, security can be increased because more coding possibilities can be implemented in a single key blade. Alternatively, the key blade can be reduced in area or length without reducing the number of key coding possibilities compared with a prior art key. An additional advantage of coding the recesses along the angled C-axis is that it affords a greater coding range. In other words, the distance moved by the pin between the first (minimum) coding surface (recesses 2₀ in the figured examples) and the furthest coding surface (recess codings 2₃ or 2₄, for example, in the figured examples) is significantly greater than for coding schemes which rely on varying the depth only. The increased range of pin displacement means that, for a given precision, a greater number of codings (geometries) can be defined for each recess. Also, because the pin contact is with a lateral flank of the coding recess, if the lateral flank is substantially perpendicular to the pin displacement axis, the positioning of the pin tip on the lateral flank may have greater tolerance than in prior art recesses where the pin contact occurs within a limited area such as the end surface of a blind-drilled hole.

The invention will be described in detail with reference to the attached drawings, in which:
Figures 1a, 1b and 1c show plan and cross-sectional views of a key coding arrangement of the prior art, as discussed above.
Figure 2a shows a perspective view of a first example of a coding recess geometry for use in the invention. Figure 2b shows a cross-sectional view along the Y direction of the recess geometry of figure 2a. The illustrated geometry is formable by a rotary tool having a rotation axis perpendicular to the plane of the key blade. Figure 2c shows an elevation view of an example of such a tool.
Figure 2d shows a perspective view of a second example of a coding recess geometry for use in the invention. Figure 2e shows a cross-sectional view along the Y direction of the recess geometry of figure 2d. The illustrated geometry is formable by a rotary tool having a rotation axis parallel to the plane of the key blade. Figure 2f shows an elevation view of an example of such a tool.
Figure 3 shows a schematic cross-sectional view of a first example of a cylinder lock and key blade according to the invention, with a recess having a first coding geometry.
Figure 4 shows the example lock of figure 3 with a second, differently-coded recess geometry.
Figure 5 shows the example lock of figure 3 with a third, differently-coded recess geometry.
Figure 6 shows a schematic cross-sectional view of a first example variant of a recess-coding arrangement according to the invention.
Figure 7 shows a schematic cross-sectional view of a second example variant of a recess-coding arrangement but not including all the features of the invention.
Figure 8 shows a schematic cross-sectional view of a third example variant of a recess-coding arrangement but not including all the features of the invention.
Figure 9 shows a schematic cross-sectional view of a fourth example variant of a recess-coding arrangement according to the invention.
Figure 10 shows a schematic plan view of a key blade with coding recesses according to the invention.
Figure 11 shows a schematic cross-sectional view of a fifth example variant of a recess-coding arrangement according to the invention.
Figures 12 and 13 show schematic plan and isometric views respectively of a key blade having two rows of coding recesses according to the invention.
Figure 14 shows a transverse cross-sectional view of flank angles in an example of a recess geometry of a coding recess for a key according to the invention.
Figure 15 shows a schematic isometric view of a key blade similar to the blade illustrated in figures 12 and 13, but with elongated recesses.
Figure 16 shows the key blade of figure 15 and its interaction with pins of a cylinder lock.
Figures 17a to 21 show schematic isometric views of further example variants of key blades with recesses coded according to the invention.
Figure 22 shows a schematic isometric view of a first example of a key blade with a contiguous recesses (groove) according to a variant of the invention.
Figures 23 to 26 show schematic plan, isometric projection, cross-sectional and plan views respectively of a third example of a key blade with contiguous recesses (grooves) according to a variant of the invention.
Figures 27 to 34 show schematic isometric views of further examples of key blades with continuous recesses (grooves) according to a variant of the invention.
Figure 35 shows a schematic isometric view of an example of a machining operation for cutting elongated coded recesses in a key blade according to a variant of the invention.
Figures 36, 37 and 38 show schematic cross-sectional views of example machine tool movements suitable for a machining operation such as the one illustrated in figure 35.
Figures 39 and 40 show a first example of a machining operation for forming coded recesses in example key blades according to a grooved variant of the invention.
Figures 41 and 42 show a second example of a machining operation for forming coded recesses in example key blades according to a grooved variant of the invention.
Figures 43 and 44 show a third example of a machining operation for forming coded recesses in example key blades according to a variant of the invention.
Figure 45 shows an example of how a machining tool arrangement used to form individual recesses as in figures 43 and 44 can be used to form the recesses as parts of a continuous groove.
Figures 46 to 48 show isometric projection, cross-sectional and plan views of a key blade according to a variant of a valley embodiment of the invention.
Figures 49 and 50 show in isometric projection an example of a key blade according to a variant of the valley embodiment of the invention.
Figure 51 shows a cross-sectional view of the engagement between the recesses of a key blade of one of figures 46 to 50, coded according to the invention, and the pins of a corresponding cylinder lock according to the invention.
Figure 52 shows a cross-sectional view of a further example variant of a key and lock pins coded according to the invention.
Figure 53 shows an example of a relative angular arrangement of the various coding axes used in the coding of a key blade such as the one illustrated in figure 51.
Figure 54 shows an example of a relative angular arrangement of the various coding axes used in the coding of a key blade such as the one illustrated in figure 52.

It should be noted that the figures are provided merely as an aid to understanding the principles underlying the invention, and should not be taken as limiting the scope of protection sought. In particular, the various combinations of coding arrangements illustrated (coding recesses or grooves on edges 3 or faces 7) are merely intended to present an illustrative subset of the possible combinations of coding arrangements which are foreseen in the scope of the invention. Where multiple coding arrangements are shown, adapted for engaging with more than one row of cylinder-lock pins, it should be understood that the individual coding arrangements for the individual pin rows can be implemented separately, or in the combination shown, or in any other permutation. Where the same reference numbers are used in different figures, these are intended to indicate similar or equivalent features. It should not be assumed, however, that the use of different reference numbers is intended to indicate any particular degree of difference between the features to which they refer. Unless otherwise indicated, cross-section views of key blades are views from the front (tip) end of the key. Recesses and their codings may be referred to as 2₀, 2₁, 2₂ etc, for example, in which case they may be referred to collectively by the group reference 2. The pin contact points of the recesses and grooves, where they are indicated at all, are indicated with reference 6 and/or merely with a dot approximately at the pin-contact location.

### Detailed description of the invention

In this text, reference is made variously to the X-axis (thickness, depth), Y-axis (width, height, lateral, transverse) and Z-axis (longitudinal, axial) dimensions of the key blade. These terms are used in the conventional sense of an X, Y, Z orthogonal coordinate system, as indicated in figures 1a to 1c in relation to a prior art key. An X-Y plane is a plane orthogonal to the Z axis, for example, and a Y-Z plane is a plane orthogonal to the X-axis. A transverse cross-section is in an X-Y plane. References to "radial" and "centre of rotation" and "rotational symmetry" relate to the rotation of the key blade when inserted in the key channel of the rotor of the cylinder lock. The centre of rotation of the rotor may or may not coincide with the central longitudinal Z axis of the key blade, depending on the configuration of the rotor, the pins and the key channel. In the following text and the drawings, the key channel is assumed to be non-central to the rotor, and to extend to the periphery of the rotor (this configuration typically permits easier manufacture of the rotor), but it should be understood that the key channel could alternatively be formed centrally or elsewhere in the rotor's cross-sectional profile. References to the height or vertical dimension of the key relate to the key when inserted in the key channel and the rotor is oriented such that the key channel is vertical in the stator.

The various cylinder locks depicted in the drawings and described in the text comprise rows of radial two-part pins. It should be understood that the invention is not restricted to this type of pin arrangement. It could for example be used with simpler one-part pins. The pins may preferably be substantially radial (ie they each move along a pin-displacement axis which intersects the rotation axis of the key/rotor), or they may be offset from the radial orientation, such that they each move along a displacement axis which does not intersect with the rotation axis. Likewise, although the illustrated examples comprise biasing springs, the rotor pins may be displaced by other means, such as by profiled engagement with the interior surface of the stator, in which case the cylinder lock would not need stator pins or stator pin holes. Unless otherwise stated, a row of pins is considered to comprise at least two, and preferably at least three, pins which are preferably substantially parallel to each other, perpendicular to the axis of rotation of the rotor and arranged along the length of the rotor, and/or which are located and oriented such that their tips engage with recesses which are arranged substantially linearly (optionally with offsets as described below) in a row along a longitudinal axis of the key blade. The rotor pins of a row are preferably similarly shaped (apart from their length, which is determined by the coding scheme). The pins are preferably rotationally symmetrical about their displacement axis, with coaxial tip and body, such that each pin's rotational orientation has no effect on its engagement with its corresponding coding recess. If the pins differ from each other in rotational symmetry, then they are preferably similarly oriented with respect to their rotational difference.

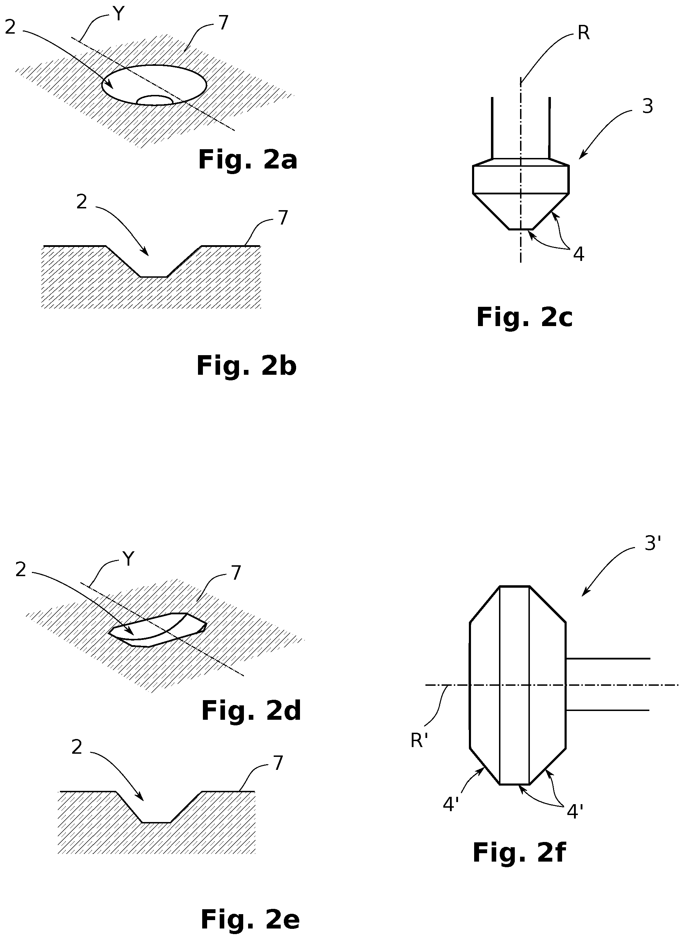

As already mentioned above, it is an advantage of the key coding of the present invention that the coding recesses have a shape, size and orientation (collectively referred to as a geometry) which can be formed simply and precisely using a single end-cutter type rotating tool with its axis of rotation orthogonal to the plane of the key blade, or using a single side-face cutter wheel type tool with its axis of rotation parallel to the plane of the key blade. This is not to say that the recess geometries are necessarily made using such a tool and tool orientation, but that they could be made using such a tool and tool orientation. In practice each of the recesses, while nevertheless having such a geometry, may actually be formed using other tools or processes. The term 'recesses' is used to include elongated recesses and open-ended elongated recesses (ie grooves). Figures 2a and 2b show a first example of a recess 2 having a geometry which is capable of being made using a rotating end-cutter type tool such as the example tool 3 shown in figure 2c. The example tool 3 has a frustoconical cutting profile, with cutting surfaces 4 and rotation axis R perpendicular to the plane of the key blade (perpendicular to the coding surface 7 of the key). Figures 2d and 2e show a second example of a recess 2 having a geometry which is capable of being made using a rotating side-and-face type cutting tool (also referred to as a wheel-type cutting tool) such as the example tool 3' shown in figure 2f. The example tool 3' has a cutting profile with cutting surfaces 4' and rotation axis R' parallel to the plane of the key blade (parallel to the coding surface 7 of the key).

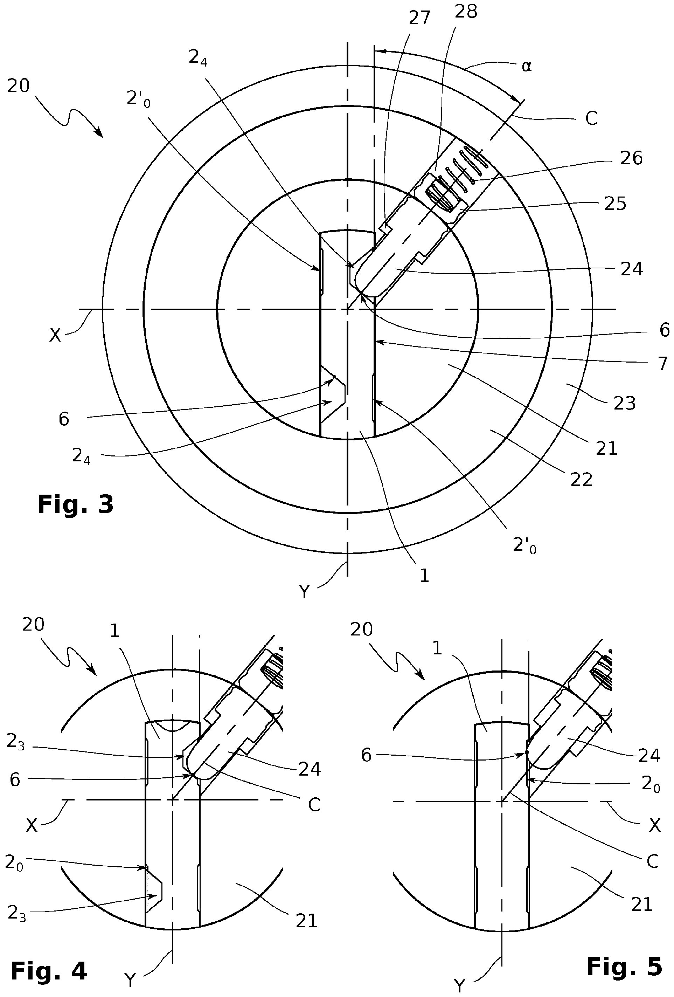

Figures 3 to 10 illustrate a simple example of a key-recess coding arrangement according to the invention. A cylinder lock 20 comprises a stator 22, optionally within a housing 23, and a rotor 21 within the stator 22. A two-part pin 24, 25 is biased towards the key blade 1 in the key channel by spring 26. The pin comprises a radially inward part 24, also known as the rotor part, and a radially outward part 25, also known as the stator part. Other types of pins may be used. The pin 24, 25 is free to move radially in and out along suitable pin channels 27, 28 in the rotor and stator. One or more substantially linear rows of such pins are provided in the cylinder lock, each pin engaging with a contact region 6 of a coding recess 2 formed on the key blade 1. The rotor 21 is free to be rotated by turning the key blade 1 if the interface between the stator and rotor parts of all the pins 24, 25 are circumferentially aligned with the interface between the stator and rotor. If the stator/rotor interface of one or more of the pins is not aligned with the stator/rotor interface of the cylinder, the rotor is blocked against rotational movement. The pin 24 is preferably arranged radially with respect to the cylindrical rotor as shown in figures 3 to 5. When the two parts 24, 25 of the pin are radially aligned, the pin moves along an axis C, referred to as the coding axis, which runs substantially parallel to the X-Y plane of the key blade and inclined at an angle α to the Y-Z plane of the key blade when the key blade 1 is in its initially inserted (ie vertical in this example) orientation as shown in figures 3 to 5. The angle α may be between 25° and 70°, or more preferably between 30° and 60°.

Three different coding recesses are shown in figures 3, 4 and 5 respectively, each formed in one of the main two opposite planar surfaces 7 of the key blade 1. These recesses are formed at different locations along the Z direction (so-called Z-coding positions) of the key blade 1, and the following discussion relates to the shape of the recess profile in the X-Y plane (ie a cross-section of the recess taken transversely through the recess, intersecting at the contact point 6 at the Z-coding location, of the recess).

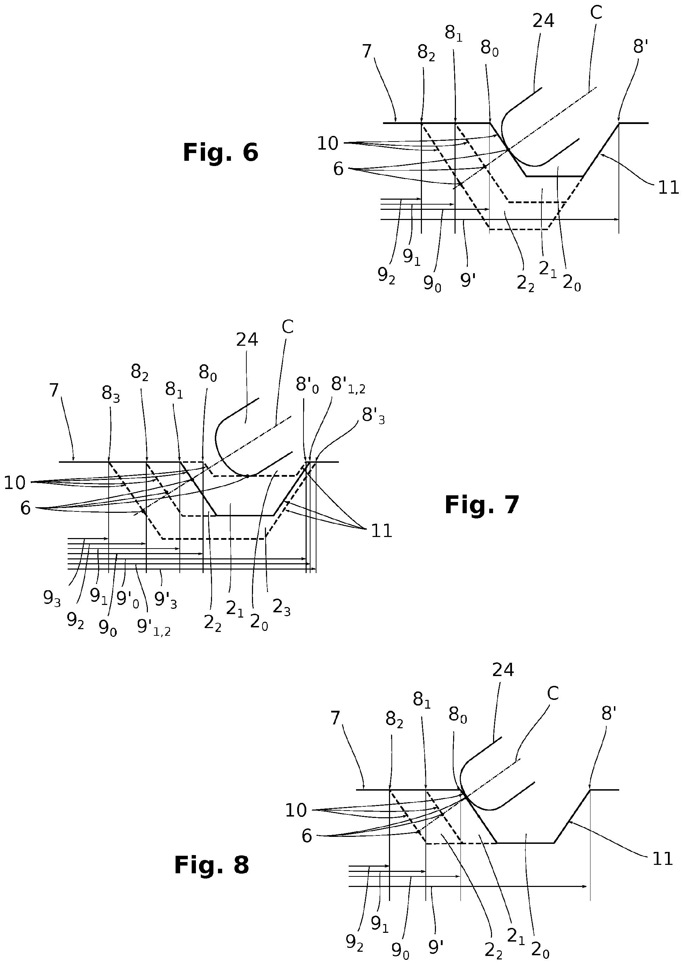

At least two of the recesses (indicated as 2₄ and 2₃ in figures 3 and 4) are shaped such that the tip of the corresponding rotor pin 24 engages (eg makes spring-biased contact) with the surface of the far flank of the recess 2₄, 2₃ at the contact point 6 indicated. Note that the far flank is the flank of the recess which contains the contact point 6 for engagement with the pin, and the terms 'far' and 'near', when relating to a recess, are considered from the point of view of the pin, and generally relate to the amount of displacement of the pin 24 into the recess (ie into the key channel of the rotor of the cylinder lock) along the C-axis. The contact between the tip of the pin and the far flank is preferably substantially orthogonal, or preferably within 10° or more preferably within 5° of orthogonal. The coding of the pins is achieved in known fashion for a cylinder lock, ie by making each rotor pin 24 with one of a predefined set of coding lengths. As will be discussed in relation to figures 6 to 13, the coding of each corresponding recess is achieved by forming the recess such that its contact point 6 lies at one of a predefined set of different distances along a coding axis C. This can be achieved by varying both the X and the Y positions of the recess flank which contains the contact region 6. Optionally, the location of the contact point 6 along the C direction can be varied by changing the Y coordinate of the far recess flank only (with the depth X being constant). Optionally, according to one variant of the invention, the coding of the contact surface region of one or more recesses of a row can be achieved by arranging the recess so that the pin 24 engages at the base surface, rather than the far flank. Such an arrangement is shown in figure 5.

Figures 6 to 8 show in more detail how each of the predefined coding recess geometries can be given a predefined coding position along the coding axis C by varying the position of the far flank 10 in which the contact surface region 6 is located, but preferably without significantly changing the position of the near flank 11. The relative definitions "near" and "far" refer to the recess as viewed along the radial coding axis C. "Far" indicates further towards the rotor's centre and "near" indicates closer to the outer periphery of the rotor. When viewed from the key blade alone, "near" may indicate closer to the blade edge which is closest to the recess in question and "far" may indicate further from the blade edge. The contact surface region 6 is the location on the recess's internal surface at which the pin 24 is designed to engage with the flank 10. In a theoretical implementation, the contact region would be a point, but there are finite tolerances in the pin displacement and in the recess machining so that in reality the pin contact will be a small region where contact is intended. For this reason, a substantially flat region (a linear part of the cross-sectional transverse profile and/or a flat part of the flank 10) may be machined at the contact region 6, to allow a generous tolerance in the rotor pin's lateral (with respect to its displacement) positioning. The pin 24 is shown with a rounded tip, but this is merely an example, and the tip may have any suitable shape such as a truncated cone with a substantially flat end surface, for example.

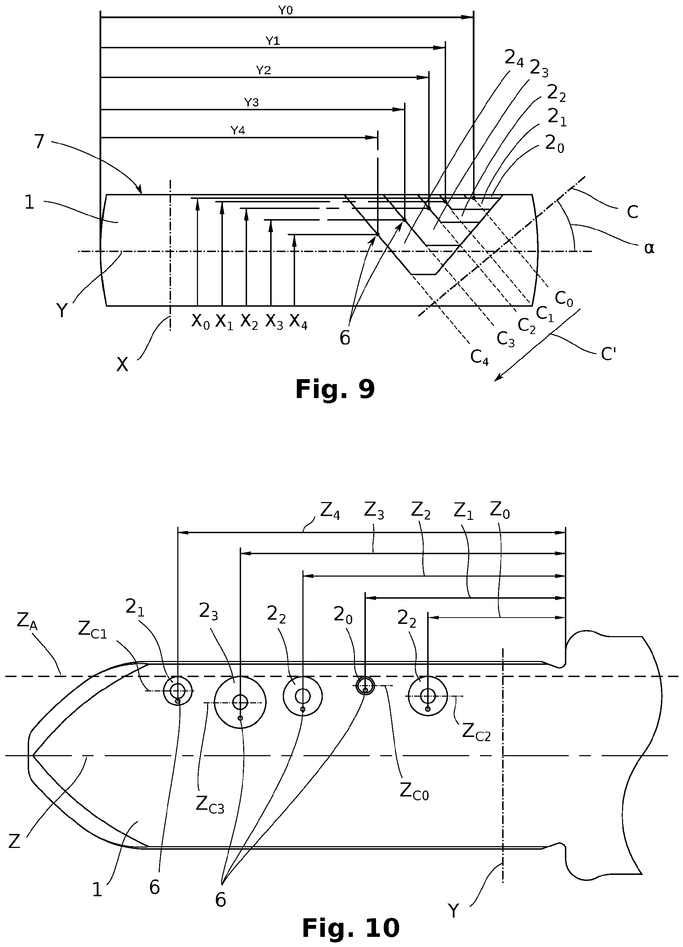

Figure 6 shows a coding arrangement in which three recesses 2₀, 2₁, 2₂ are formed, each having substantially the same or similar transverse profile shape, but different depths and widths. Note that each recess is shown as having a symmetrical trapezoidal profile, but the recesses could have other, symmetrical or non-symmetrical profiles. Each recess profile has a first, near shoulder 8', where the near flank meets the main blade surface 7, and a second, far shoulder 8₀, 8₁, 8₂, where the far flank meets the main blade surface 7. The near shoulders 8' of the recesses are aligned along the Z_{A}-axis (see figure 10), so share a common Y-position 9' (ie the near shoulders 8' are at substantially the same location in the Y-direction. The far shoulders 8₀, 8₁, 8₂ are located at Y-positions 9₀, 9₁, and 9₂ respectively. The Y-positions may be defined as distances from a feature of the elongate key blade which does not vary along the longitudinal (Z) axis, for example centre axis Z of the key blade, or one of the edges of the key blade. The near flanks 11 are substantially mutually aligned in a common place parallel to the Z axis (eg a plane containing the Z_{A} axis) and substantially parallel to the near flanks 11. This alignment facilitates adequate pin clearance to the near shoulder and/or flank 11, for example for the pins of a straight row of pins.

Figure 7 shows a variation on the arrangement of figure 6, comprising four different coding recess profiles 2₀, 2₁, 2₂, 2₃, but not including all the features of the invention. In this example, the Y-positions 9'₀, 9'_{1,2}, 9'₃ of the near flanks 11 and the shoulders 8'₀, 8'_{1,2} and 8'₃ vary slightly, but to a much smaller degree than the Y-positions 9₀, 9₁, 9₂ and 9₃ of the far flanks 10 and shoulders 8₀, 8₁, 8₂ and 8₃. References 8_{1,2} and 9_{1,2} indicated that the same values apply to 8₁ and 8₂, and that the same values apply to 9₁ and 9₂. In this example also, three (2₁, 2₂, 2₃) of the recesses have pin contact points 6 which are mutually aligned in the coding direction (ie a direction parallel to the coding axis C, indicated elsewhere as C'). In fact the three contact surface points 6 of these recesses lie on the coding axis C in this case. The contact point 6 of recess 2₀ lies on the base surface of the recess, and is therefore not aligned with the others. Nevertheless, the position of this contact point 6 corresponds to a particular pin coding length, and can therefore be treated as such when calculating the coding scheme for the key.

Figure 8 shows a recess configuration in which similarly-shaped recess profiles have the same depth, but differ in width, and thus this configuration does not include all the features of the invention. Again, the recesses can be coded by the Y-position of the far flank 10, while the near flanks 11 of the recess profiles remain aligned.

As can be seen from the figures, the coding recesses of a particular row of recesses may advantageously have similar X-Y profiles, such that they can be formed by the same machine tool, and preferably the same tool orientation, when the key is being coded. The recesses' X-Y profiles thus preferably have similar general shape and orientation, even if they vary in width and depth as shown in figure 6, or depth and/or width, as shown in figure 7, or width only, as shown in figure 8. It may also be possible to implement a C-coding in which only the depth of the recesses is varied. The variations nevertheless preferably have the common feature that the Y-locations of the far flanks 10 are varied for the coding, while the near flanks 11 are not, or are varied to a much lesser degree. If the Y-positions of the near flanks 11 are varied, then their variation is significantly less than the variation in the Y-positions of the far flanks 10 for different codings. The near flanks 11 may advantageously be aligned along the Z direction. When coding, recesses having different predetermined codings, the recesses may advantageously be formed by displacing the cutting tool along only the C-axis at each Z-coding location; in this way, the different codings can be defined using a single number (distance along the C-axis).

Thanks to the manifold combinations of different coding possibilities, it is possible to produce coding recesses which appear identical (the same depth, size and/or shape, for example), but which provide a different coding function be virtue of the different location of the contact point 6. Similarly, it is possible to provide recesses which appear different from each other, but which provide the same C-coding value (distance along the C-direction).

While figures 6, 7 and 8 show coding arrangements in which the contact points 6 (or at least those where the pin contact to the far flank is orthogonal) are aligned along the inclined coding axis C, figure 9 shows an arrangement in which the contact points 6 are not aligned with the coding axis C. Predefined coding recess geometries 2₀, 2₁, 2₂, 2₃, 2₄ may be deliberately irregular, but may nevertheless result in X and Y components (X₀, X₁, X₂, Y₀, Y₁, Y₂ etc) of the C-coding (C₀, C₁, C₂ etc) which are themselves regularly spaced.

Figure 10 shows in plan view how the recesses of figure 9 would appear, when formed at Z-positions Z₀, Z₁, Z₂ etc. The near shoulders 8' of the recesses are aligned along the axis Z_{A}, and the far flanks, with their contact points 6 indicated, are not mutually aligned (except the two recesses with the same coding 2₂ in this example). Instead of, or as well as, considering the variation in Y-position of the recesses' flanks and shoulders as described above, each recess may be considered to have its own centre-axis in the Z direction. In this example, the axes Z_{C1}, Z_{C3}, Z_{C2}, Z_{C0} are mutually non-aligned, as they have different positions in the Y-direction. In this simple example, the two-dimensional view of the recess positioning is considered. A three-dimensional representation of the recess positioning (coding) could also take into account an X component of each Z_{C} axis. In this case, the Z_{C} axes would represent a volume centre axis of each recess. In order to achieve the desired coding used in the invention, at least the Y component of each Z axis position should differ between the preset coding recess definitions. C-coding (coding along the C-axis) can be achieved by varying only the Y component of the far flank location, or by varying the X and Y components of the far flank location. Where the coding is such that the contact point 6 is not on the far flank (see for example the 2₀ coding in figure 7), one or more additional coding geometries (ie additional to the aforementioned coding geometries) may be achieved by varying only the X component.

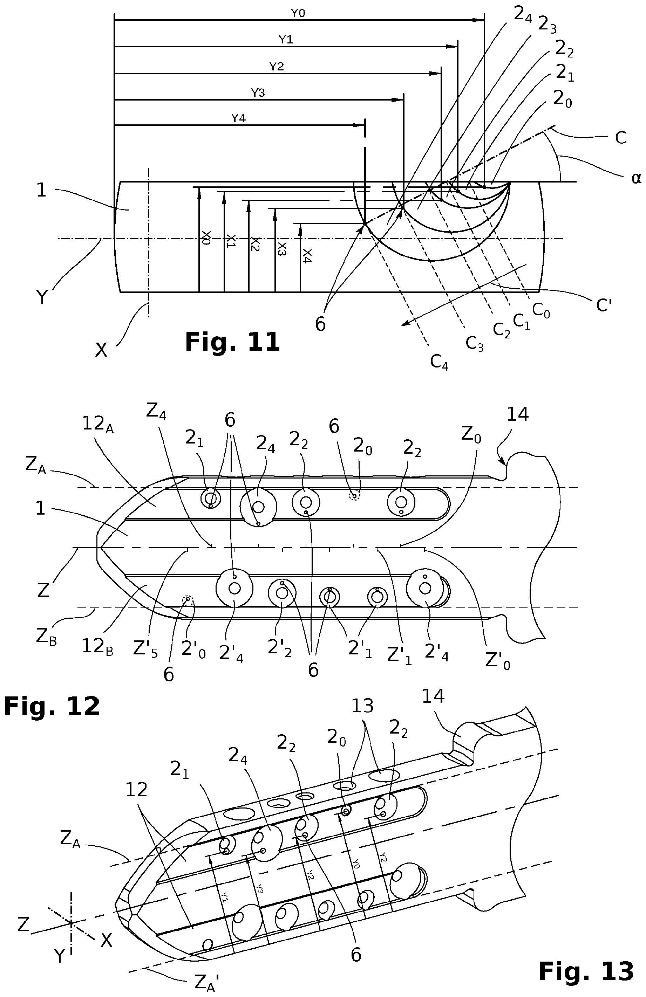

Figure 11 shows how other recess profile shapes (geometries) may be used for implementing the invention. In this example, the recesses have a substantially circular or parabolic or otherwise curved cross-section in the X-Y plane, and the far flank comprising the pin contact point or region 6 may be a portion of the recess's generally curved inner surface (optionally with a flat portion of the surface at the contact-point/region 6 in order to improve pin-positioning accuracy). In other respects, the implementation shown in figure 11 may function in a similar manner to the trapezoidal cross-section recesses described above. By using a pin having a rounded tip, optionally engaging with a curved recess flank, tolerances may be defined more precisely.

Figures 12 and 13 show an example key blade 1 with a row of recesses 2, indicated as being near-flank-aligned along longitudinal axis Z_{A}. This example, as with subsequent examples, illustrates that there can optionally be further recesses 13 on the narrow blade edges. Key blade 1 is shown as having at least one functional surface region 12_{A}, in which the coding recesses 2, 2' are machined. The functional surface 12_{A} may serve as the zero-coding level, with the pin contact being oblique as shown in figure 5. For this reason, the notional 'recess' 2₀ is indicated by a dashed circle as a region of the surface 12_{A}. A second row of recesses 2' is also shown, near-flank-aligned on longitudinal axis Z_{B}. In this example, the recesses 2 are located at five Z-positions Z₀ through Z₄, while there are six recesses 2' at Z positions Z₀ through Z₅. The two rows of recesses 2 and 2' are advantageously staggered in the Z-direction, as shown, so that the pins of one row do not interfere with recesses of another.

Figure 13 shows how the Y-positions of the contact points 6 of the recesses 2 may be defined with respect to a suitable reference such as the lower edge of the key blade, for example. A corresponding measure could be made for the X component of the contact point position, eg from the functional surface 12. Figures 12 and 13 also indicate the key shoulder 14 (which is terminologically unrelated to the recess shoulders mentioned above). The key shoulder 14 provides a stop to prevent the key from being inserted further into the rotor of the cylinder lock. It may serve as a reference point for measuring Z-positions of the coding recesses and their component features. The key bow is not shown.

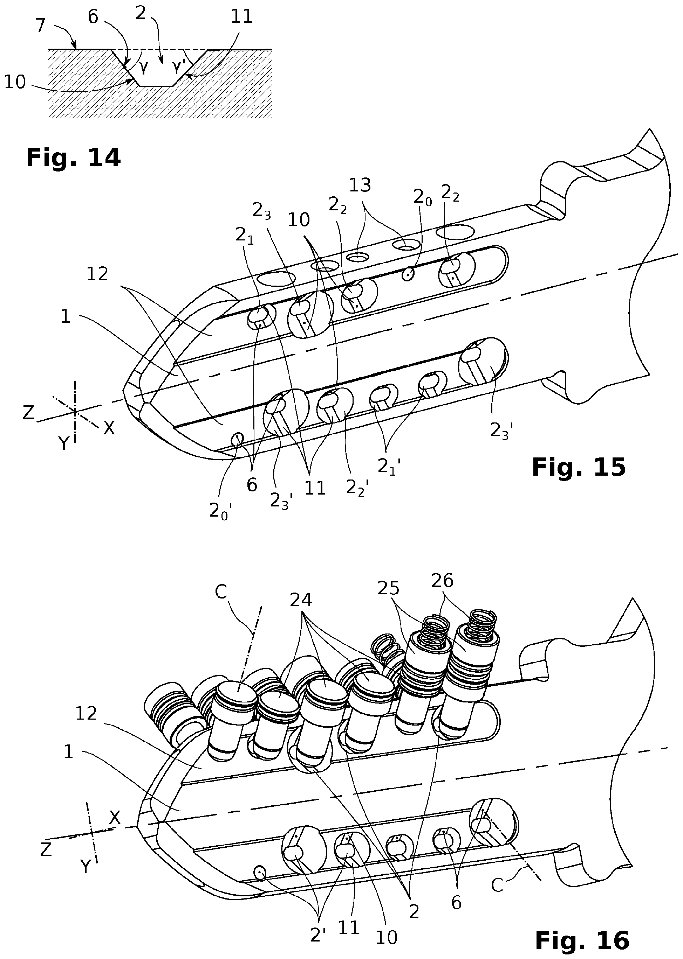

Figure 14 shows an example of a transverse (ie orthogonal to the Z-axis) cross-section of a coding recess geometry of a coding recess 2, showing angles y and γ' of the far and near flanks 10 and 11 respectively. Angle γ, which represents the angle of the recess surface at the pin contact region 6 with respect to the blade surface 7, may be between 0° and 90°, or preferably between 30° and 60°. The magnitude of angle y' is preferably such that the angled pin which engages with contact region 6 has adequate clearance (eg minimum clearance of between 0.05 mm and 0.5 mm) from the shoulder of the near flank 11 to the pin.

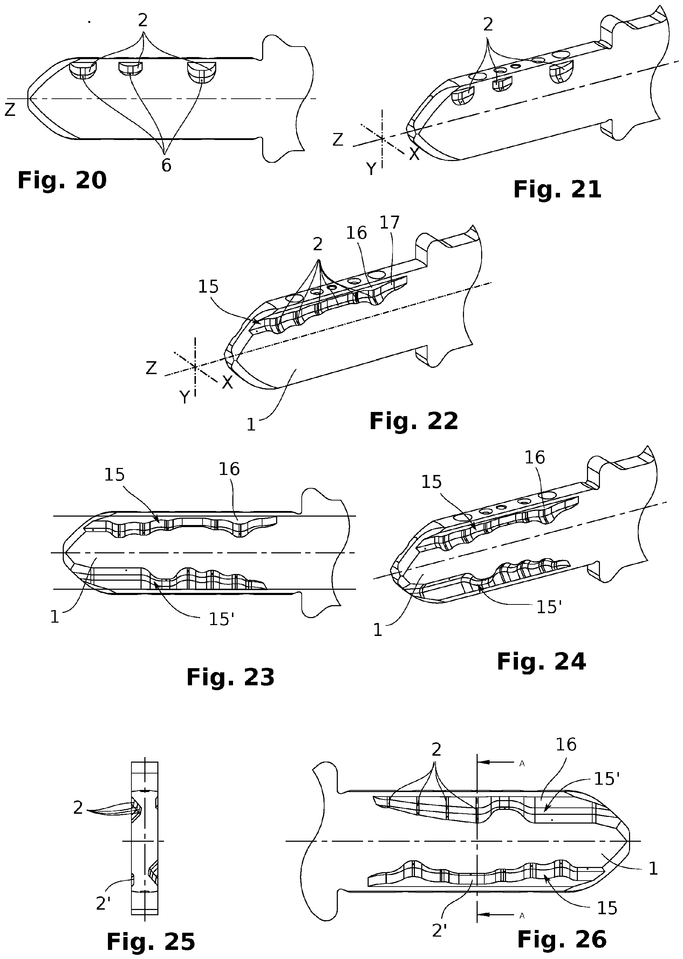

Figures 12 and 13 show circular recesses 2 and 2' which may for example be milled using a rotary milling tool, having the shape of a truncated cone, moving perpendicularly into and out of the material (eg punched steel) of the key blade 1. Figure 15, by contrast, shows an example variant in which the recesses (both rows 2 and 2' in this example, although any combination of eloganted and non-elongated recesses may be used) are elongated along the longitudinal (Z) direction of the key blade 1. As will be described below, such elongated recesses may be formed, for example, by moving the rotary milling tool longitudinally. Elongated recesses have the advantage that they provide a flat far flank surface for the pin contact region 6, so that the pin positioning accuracy and pin-positioning tolerance relative to the pin contact region can be improved, as described above. The recesses may be further elongated such that they run into one another, thereby forming a continuous groove, as will be described in relation to figures 22 to 52 below. Figure 16 shows the interaction of the pins 24, 25 and spring 26 (other components of the cylinder lock are omitted for clarity) with the recesses 2 of figure 15. Note that figure 16 shows a key blade 1, which is not correctly coded, for the pins illustrated, and the key/pins combination would not permit the cylinder to be rotated. In particular, the rotor pin depicted on the near side at position 5 (counting from the bow of the key) is too short and its corresponding stator pin would block the rotation of the cylinder.

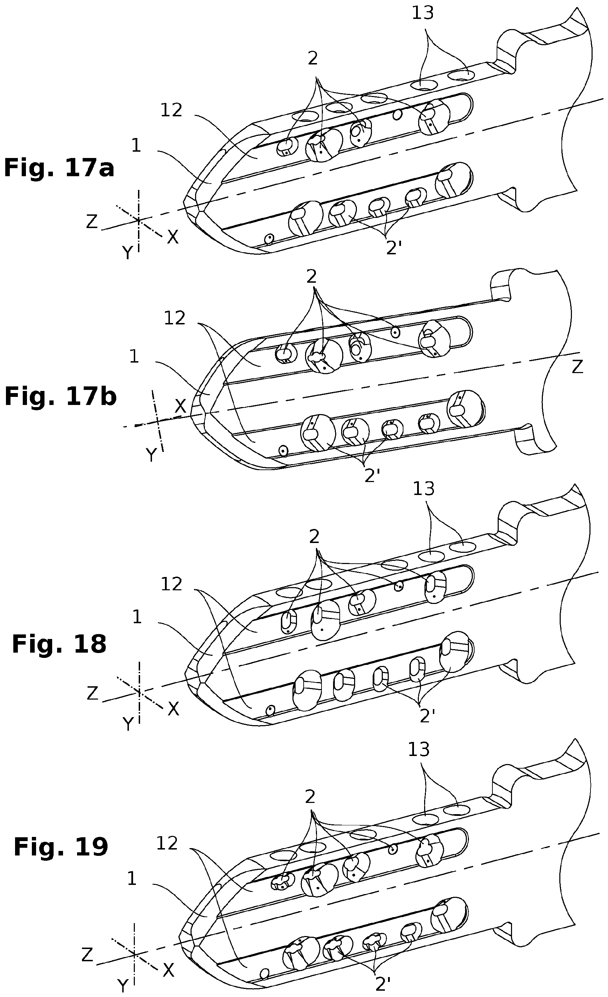

Figures 17a, 17b, 18 and 19 show further example variants of recess profiles which can be used to implement the invention. Combinations of shapes can be employed for the coding - combinations of differently-shaped recesses, or combinations of shapes in one recess. Figures 17a and 17b show an upper row of recesses comprising at position Z₀ (nearest the bow) a Z-elongated recess with a stepped near flank (this may be used to permit an increase in the Y-position of the far flank by increasing the clearance between the pin and the near shoulder of the recess). At position Z₂ (third from the bow) is a circular recess with an extended near flank, which may achieve a similar effect (increased pin clearance) to the recess at Z₀. The recess at position Z₃ is elongated along the Z direction and its near and far flanks have been subjected to a second machining step (eg a conical milling tool) to remove a small amount of the near and far flanks, in this case over the full depth of the recess. By superimposing part-geometries in this way, the complexity of the resulting geometry, and therefore the security of the key, is increased, and the key coding is rendered more difficult to reverse-engineer or copy.

Figure 18 shows a variant in which some of the recesses 2, 2' have been elongated along the Y-axis. This can help create additional clearance for the pin to enable it to reach the far flank without interfering with the near flank. It also enables the predetermined codings (ie the C-locations of the contact points 6) to be made by widening the recess formed by perpendicularly-oriented rotary end-cutter tool by additionally moving the tool along the Y direction.

Figure 19 shows another combination of different recess profile shapes comprising superposed geometries which can be formed by using multiple different milling tools, or by moving a single frustoconical milling tool in the Z direction to make the elongated recess, and in the Y direction to form the additional concave profiles on the near and far flanks. The complexity and variety of such composite shapes can render the key coding less easy to copy. The far flank of each recess can be formed for coding as discussed above, but the near flank may also contribute to the coding geometry in that it may be positioned and shaped to allow good pin clearance, or the near flank may be designed to block the pin from entering the recess at all, thereby creating the illusion of a coding recess, but one which the pin does not engage with in the expected fashion.

The example key blades 1 and recesses illustrated above may be manufactured using a rotary milling tool, for example with its rotation axis substantially perpendicular to the key blade surface 7.

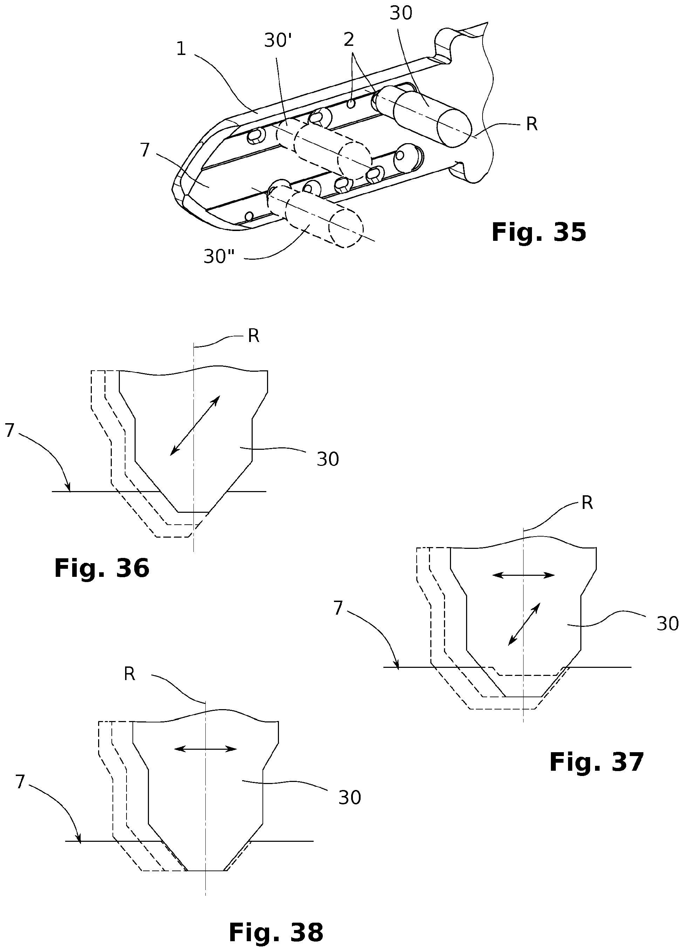

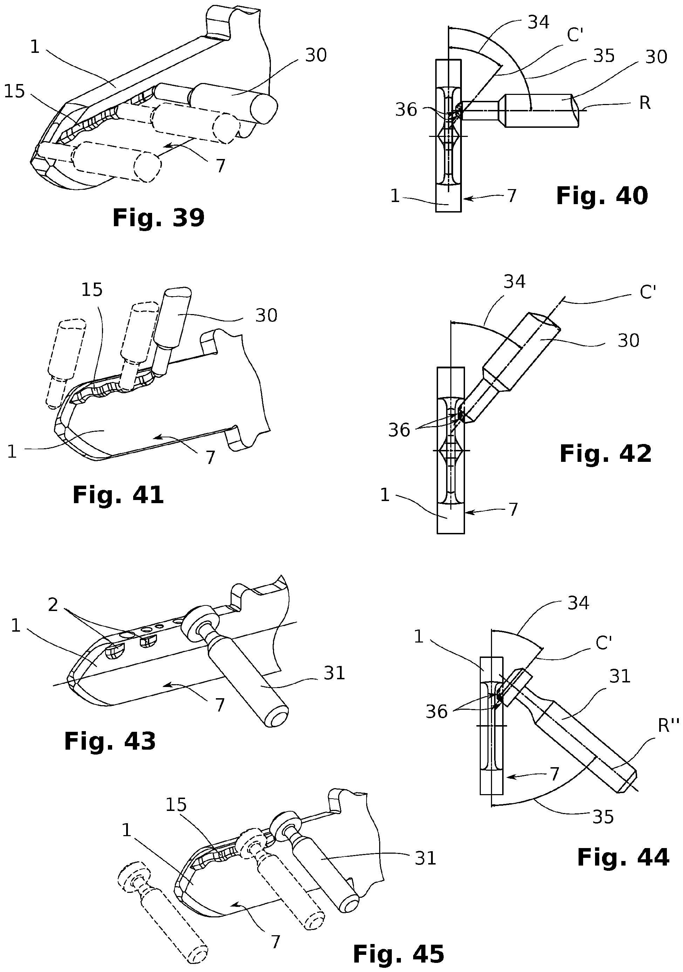

Figures 20 and 21, by contrast, show how a profiled T-type cutter (wheel-type or face-and-side cutter milling tool) can be used to machine recesses 2 into the key blade 1, similar to the recess illustrated in figure 2e. This kind of recess shape has similar or identical cross-sectional X-Y profile shape to recesses made with a perpendicular milling tool (see figure 35). The milling process will be discussed in relation to figures 39 and 40. This recess shape, which preferably has less abrupt shoulders at its Z-extremities than on its near and far flanks, has the advantage of reducing wear on the key, and of making the key blade 1 easier to insert and remove from the key channel of the cylinder lock because of the recesses' more gradually sloping ends.

Figures 22 to 34 illustrate examples of key blades in which the multiple discrete recesses described above are connected by a joining groove to form one or more contiguous recesses, each of which may be thought of as a coding groove 15 comprising the coding recesses 2 and a continuous connecting recess joining the coding recesses. The 'recesses' (or at least the pin-contact regions 6 on their far flanks) may optionally each be machined with an individual flat flank portion containing the recess's pin contact point 6, so as to improve pin position precision and/or increase the pin-tip positioning tolerance. Alternatively, the groove may be machined smoothly (ie without discontinuities) throughout. The groove or 'continuous recess' implementation has the advantage of reducing wear on the key, and it serves to disguise coding information which might suggest to a would-be key-copier where the pin-contact regions are located in the groove. The groove 15 may be formed by the same (eg milling) processes as have been described above for forming the individual recesses, but with the additional step of moving the milling tool along the Z direction so as to form the connecting groove 15 while also varying the tool's position along the coding axis C to create the coding recess portions 2 of the groove 15. As with the mutually-aligned near flanks 11 of the individual recesses 2, the near flank 16 of the groove 15 may preferably be formed as a continuous flank surface whose profile shape and position is substantially constant over the length of the groove. The near flank 16 may be planar, for example. A run-out region 17 may be included at the bow end of the coding groove in order to make the groove easier to manufacture. A run-in region may be provided at the front (tip of key) end of the coding groove to enable pins to engage with the groove 15 more easily and with less wear.

Figures 23 to 26 show different views of an example of a key having grooves like those described above. In particular, the key illustrated in this example has a reversible-coded blade 1 with a first reversible pair of coding grooves 15 and a second reversible pair of coding grooves 15', coded differently from the first pair 15. Such coding grooves 15 and 15' are functionally equivalent to the reversible patterns of coding recesses 2 and 2' depicted in other figures. The four grooves are designed to cooperate with two rows of pins 24, 24' of the corresponding cylinder lock. One of the rows of pins cooperates with one of the pair of grooves 15, and the other, differently coded row of pins, cooperates with the other pair of grooves 15'. As with the rows of coding recesses 2 and 2', each side of the reversible key blade has one of each type (15 and 15') of groove.

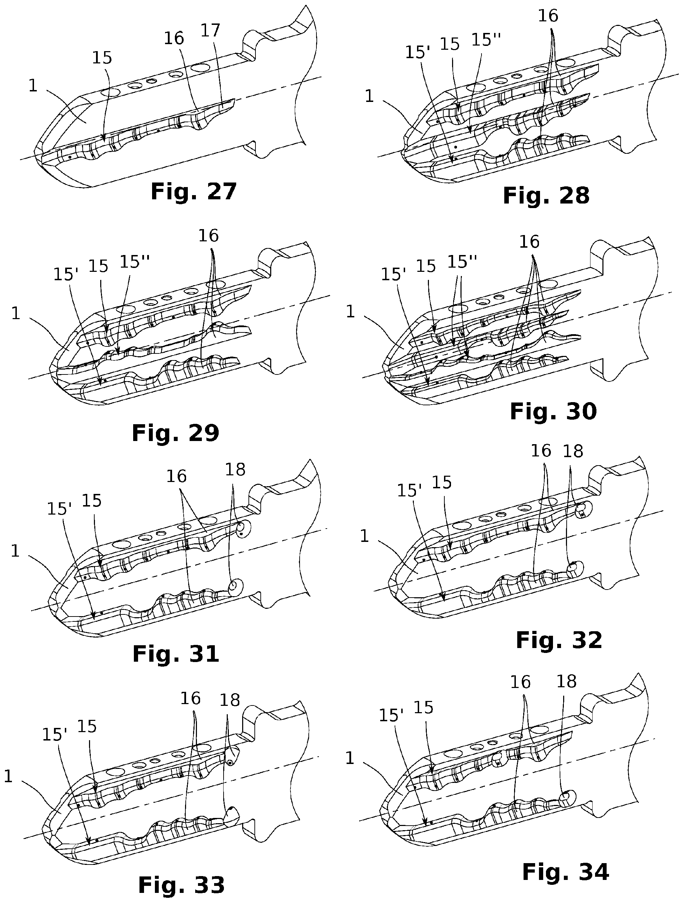

The example blade shown in figure 27 has a single coding groove 15 extending along a central part of the blade 1, arranged for engagement with a row of pins inclined from above, as viewed in the figure, and contacting the lower flank of the groove 15. Figure 28 shows a blade 1 having three coding grooves 15; the uppermost groove (as viewed in the figure) is for engaging with pins inclined from above, as is the middle groove. The lower groove is configured for engagement with pins inclined from below. Figure 29 shows another blade 1 with three coding grooves 15, configured for engagement with one row of pins from above and two from below. Figure 30 shows a blade 1 with four coding grooves 15, configured for engagement with two rows of pins from above and two from below.

Figures 31 to 34 show how coding grooves 15 can be combined with other coding recesses 18. The additional coding recesses 18 may be configured for engagement with angled pins, as for the grooves, or they may be configured for perpendicular engagement with pins. In the case of figure 33, the recesses 18 are of the drilled, angled type, configured for head-on engagement with inclined pins in the manner known from EP1185755. In figures 31, 32 and 34, the additional recesses 18 may be used for engagement with inclined or perpendicular pins. Combining grooves with recesses can make it easier to fit more pins and recesses (or coded groove portions) without having to increase the length of the cylinder and key.

Figures 35 to 38 show an example coding process of the key blade 1. Rotary milling tool 30 has an axis of rotation R and a cutting tip having the shape of a truncated cone (other shapes may be used). In the example, the tool is held perpendicular to the face 7 of the blade 1 as the tool is moved along the coding axis C until the tool tip reaches the required C-position corresponding to a particular recess coding depth. If the recess is to be elongated in the transverse direction Y, as shown in figure 35, the tool may be moved laterally in the transverse direction Y after it reaches the depth (X) of the required C-coding at that coding location. If the recess is to be elongated in the longitudinal direction Z, as shown in figure 36, the tool 30 may be moved in the longitudinal direction Z once it reaches the depth (X) required for the C-coding at that coding location. The tool may optionally be held with its rotation axis at an angle other than perpendicular when machining the recesses or groove 15, as will be described in relation to figures 41 and 42.

Figures 39 and 40 show how the method illustrated in figures 35 to 38 may be used to form the groove 15 in the groove-variant of the coding described earlier. In this example, the tool 30 has two cutting surface regions 36. The tool 30 is held perpendicular to the surface 7 of the key blade 1 and displaced in the X-Y plane along the C axis according to the coding (at each Z-position of the coding recess portions of the groove 15) and according to the desired transition portions of the groove 15 between the coding recess portions 2. In this perpendicular orientation, one of the cutting surfaces 36 is preferably parallel to the face 7 of the blade 1. In the same process, the tool 30 is moved along the Z direction to form the groove 15.

Figures 41 and 42 show a variant on the groove-coding method described above, in which the tool is held with its rotation angle at a non-perpendicular angle to the blade face 7. Advantageously, the rotation axis may be parallel to the coding axis C and the tool 30 may be advanced or withdrawn along the C axis as the tool moves along the Z-direction, to form the groove 15. The tool 30 preferably has a cutting face 36 parallel to the face 7 of the blade 1 when in this orientation.

Figures 43 to 45 show a further example of a cutting process for coding the coding recesses 2 or groove 15. In this example, a profiled wheel-type cutter 31 is held with its rotation axis R" at a suitable angle 35 for the profiled cutter wheel to form the desired near flank 11 or 16, the coded far flank and the base surface of the recesses 2 or groove 15.

Figures 46 to 48 show an embodiment of the key blade 1 in which each face of the blade has a shallow V-shaped (or optionally U-shaped) valley 40 formed in the surface 7 of the key in addition to C-coded recesses 2. The valley is preferably as described in detail in the aforementioned co-pending application. The sides ('valley flanks') 41, 41' of the valley 40 have further coding recesses 42, 42', coded by depth and arranged for preferably orthogonal contact engagement with (eg radial) pins of the cylinder lock. Orthogonal in this sense means that the coding axis of the recess and/or pin, and preferably the pin displacement axis, are orthogonal to the valley flank in which the corresponding recess is formed. The valley and the recess configuration are preferably reversible on the key blade, so that each face of the key of figures 46 to 48 is designed to cooperate with two rows of pins. The pins for the C-coded recesses are inclined downwards to make (eg substantially orthogonal) contact with the lower flanks of the recesses 2, and the pins for the adjacent valley-flank coding recesses 42 are inclined upwards to make (eg substantially orthogonal) contact with the floor (surface of the deepest region) of each recess 42. Such an arrangement of recesses and contra-inclined pins enables a higher density of recesses on the key and pins in the cylinder, thereby greatly increasing the number of coding combinations and thereby the level of security.

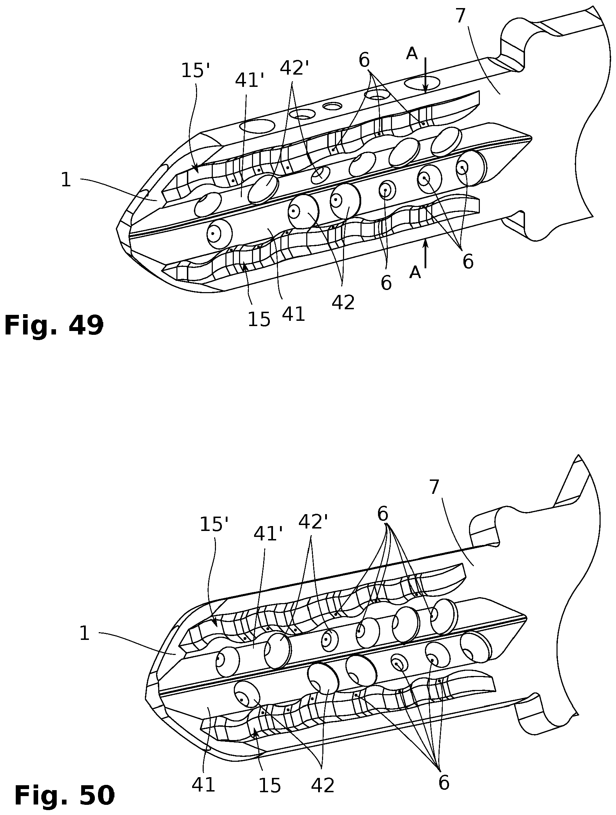

Figures 49 and 50 show how some or all of the C-coded recesses 2 and/or 2' shown in figures 46 to 48 may be implemented as continuous grooves 15, as described above. Such grooves not only reduce wear and improve coding accuracy, but they also help to disguise the coding scheme and thereby make the key coding more difficult to carry out by an unauthorised person. The valley recesses 42 may optionally be similarly implemented as grooves, in similar fashion. If present, coding recesses 13 on the edges 3 of the blade 1 may optionally be implemented as similar grooves.

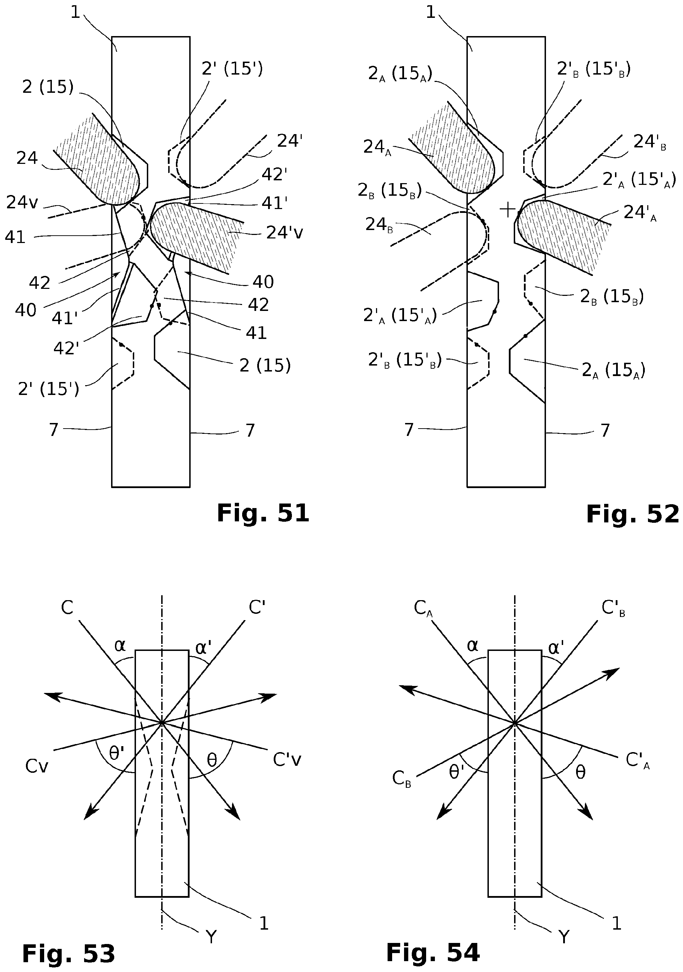

Figure 51 shows in cross-section how the combined coding arrangement of the recesses 2, 2' or grooves 15, 15' (for steeply-angled pins engaging with the recess flanks), combined with the valley recesses 42, 42' (or grooves), offer an arrangement which allows many pins (in this case four) 24, 24v, 24', 24'v, to be combined in a small space, optionally for rows of pins at different combinations of angles, so as to greatly increase the number of coding possibilities for a reversible key blade 1, without the need for a larger or more complex cylinder lock. The two shaded pins 24 and 24v are shown in the cross-section, and belong to two different rows of pins on opposite sides of the key blade 1. Two pins 24' and 24'v shown in dashed outline are outside the plane of the cross-section, and belong to two other rows of pins on opposite sides of the key blade 1. The four rows of pins, and their corresponding recesses/grooves, could be combined in the arrangement shown, or they could each be implemented alone, or in any other permutation. Further rows of pins and recesses/grooves could be added, where space permits, on the faces 7 or on the edges 3 of the key blade.

Figure 52 shows an example arrangement in which four rows of pins 24_{A}, 24_{B}, 24'_{A} and 24'_{B} are arranged similarly to the pins of figure 15. In this example, the pins are arranged for angled engagement with the far flanks 10 of each recess 2_{A}, 2_{B}, 2'_{A} and 2'_{B} and/or groove 15_{A}, 15_{B}, 15'_{A} and 15'_{B} in one of the C-coding arrangements described above. As with all the other variants of the invention, the recesses 2_{A}, 2_{B}, 2'_{A}, 2'_{B} and/or grooves 15_{A}, 15_{B}, 15'_{A} and 15'_{B} have geometries which can be formed by an end-cutter tool with its rotation axis perpendicular to the face in which the recess/groove is being formed, or by a side-and-face cutter (wheel) type tool with its rotation axis parallel to the face in which the recess(groove is being formed. In this example, for illustrative purposes, the recesses/grooves 2'_{A}/15'_{A} are shown with the optional feature of a far flank 10 which comprises more than one (two in this example) straight-profiled portions, such that a part of the far flank nearer to the face 7 is angled more steeply than the other portion of the far flank. The contact region 6 for the pin 24'_{A} may be arranged in either of the portions, depending on the pin angle and geometry of the particular recess. By inclining part of the far flank more steeply, it is possible to reduce the area and transverse (Y) width of the recess, thereby further increasing the potential coding density on the key blade 1.

Figure 53 shows schematically the various coding axes C, C', Cv and C'v of the recesses 2, 2' (or grooves 15, 15'), 42, 42' depicted in figure 51, and the angular and directional relationship between them. The coding axes are shown as intersecting at a common axis (which may also be coaxial with the axis of rotation of the key blade 1 when inserted in the rotor 21 of the cylinder lock 20). However, some or all of the axes may alternatively be arranged in a non- or differently-intersecting manner.

Figure 54 shows, in a similar fashion, the angle relationships between the axes of the pin/recess arrangement of figure 52, where C_{A} is the coding axis of pins 24_{A} and recesses 2_{A} or groove 15_{A}, C'_{A} is the coding axis of pins 24'_{A} and recesses 2'_{A} or groove 15'_{A}, C_{B} is the coding axis of pins 24_{B} and recesses 2_{B} or groove 15_{B}, and C'_{B} is the coding axis of pin 24'_{B} and recesses 2'_{B} or groove 15'_{B},

Figures 53 and 54 illustrate how the coding axes can be angularly arranged so as to increase or maximise the angular separation between them, thereby allowing the density of coding recesses to be increased or maximised on the Y-Z face of the blade, while avoiding overlapping or impossible-to-manufacture surface geometries, and allowing the density of pins to be increased or maximised in the rotor 21, while avoiding interferences between the pins or structurally thin and weak parts in the rotor.

## Claims

1. Reversible flat-bladed key for insertion into a key channel of a cylinder lock (20) with Y-Z faces (7) of the key blade (1) parallel to side-surfaces of the key channel, the lock (20) having a row of mutually similarly shaped rotor pins (24) each having substantially coaxial tip and body, and each being located at a predetermined axial Z-coding pin location along one of the side-faces of the key channel, and each being displaceable along a coding axis (C) of the key, wherein the coding axis (C) is inclined at a coding angle (α) to the said X-Y face (7) when the key blade (1) is inserted in the key channel;
the key blade (1) having a thickness axis X, a transverse axis Y and a longitudinal axis Z, the X, Y and Z axes being mutually orthogonal and the Y-Z surfaces being substantially parallel to the Y-Z plane containing the Y and Z axes;
the blade (1) comprising at least a first row of a plurality of first coding recesses (2) each formed at a predetermined Z-coding recess location (Z₀, Z₁, Z₂, Z₃), along the Y-Z surface (7) of the blade (1), corresponding to one of the Z-coding pin locations;
each coding recess (2) having one of a first plurality of predetermined mutually different first coding recess geometries (2₁, 2₂, 2₃), each coding recess geometry comprising a pin contact surface region, referred to hereinafter as the contact region (6), for coded contact engagement with a corresponding one of the pins (24) of the cylinder lock (20), wherein each coding recess geometry is formable by an end mill type cutter (3) having a first rotation axis (R) orthogonal to the plane of the blade (1), or by a side-and-face mill type cutter (3') having a second rotation axis (R') parallel to the plane of the blade (1), and wherein the contact regions (6) of the different coding geometries are located at different predetermined C-locations along a C-direction (C') parallel to the coding axis (C);
**characterised in that**
the coding angle (α) is between 30° and 60°,
each of the coding recess geometries (2₁, 2₂, 2₃) has a transverse cross-section profile comprising a first flank (10) containing the contact surface region (6), such that the contact region (6) is inclined at a second angle (γ) of between 30° and 60°, to the blade plane, and substantially orthogonal to the coding axis (C), and a second flank (11), on an opposite side of the recess across a width of the recess from the first flank, and
wherein the said coding recess geometries (2₁, 2₂, 2₃) differ in width along a transverse (Y) direction, parallel to the Y axis, and in depth along an X direction, parallel to the X axis, such that the first flank (10) of each coding recess shape is at a different transverse location, and such that the second flanks (11) of the coding recess geometries of all the said plurality of coding recesses (2) are substantially mutually co-aligned in a plane containing a longitudinal axis (Z_{A}) parallel to the Z axis.

2. Key according to claim 1, wherein the coding recess geometry of said each coding recess (2) is formed such that a plane tangential to its pin-contact region (6), hereafter referred to as the pin-contact plane, is substantially perpendicular to the coding axis (C).

3. Key according to one of claims 1 or 2, wherein the coding recess geometry of said each coding recess (2) is formed such that a plane tangential to its pin-contact region (6), hereafter referred to as the pin-contact plane, is
substantially parallel to the Y axis and non-perpendicular to the C-axis; or
substantially parallel to the Y-Z plane; or
configured such that its pin contact region (6) is located off the C axis and angled for oblique contact with the said corresponding pin (24).

4. Key according to one of the preceding claims, wherein the row comprises coding recesses (2) having at least two, or preferably at least three, different ones of the said coding recess geometries.

5. Key according to one of the preceding claims, further comprising a longitudinal concavity (40), referred to as a valley, having a shallow V-shaped cross-section and extending along the longitudinal axis of the blade (1), the valley comprising at least one substantially flat coding surface (41, 41'), referred to as a valley flank, inclined at between 10° and 30°, or preferably between 15° and 22°, to the Y-Z plane of the key blade (1).

6. Key according to one of the preceding claims, wherein one or more of the coding recesses of the row have a circular Y-Z cross-section.

7. Key according to one of the preceding claims, wherein one or more of the coding recesses of the row have an elongate Y-Z cross-section formable by an Y or Z displacement of the said end-cutter (4) or side and face cutter tool (4').

8. Key according to one of the preceding claims, wherein at least two, or preferably all, of the said coding recesses of the said row are formed as portions of a continuous coding recess (15) extending longitudinally along the Y-Z face (7).

9. Key according to one of the preceding claims, wherein each Y-Z face (7) further comprises a second row of second coding recesses (42, 2_{B}), wherein each of the second coding recesses has one of a second plurality of predetermined second coding recess geometries, wherein the second geometries are coded along a second coding axis (C_{B}) having an opposite inclination to the angle (α) of the coding axis (C_{A}) of the recess geometries of the first row with respect to the X-Y plane.

10. Cylinder lock for a reversible flat-bladed key according to one of the preceding claims, the lock comprising a rotor (21) rotatable in a stator (22) about a rotor axis, wherein the rotor (21) comprises a key channel for receiving the key blade (1), the key channel having side-surfaces parallel to the X-Z plane of the key blade when the blade (1) is inserted in the key channel, wherein:
the key channel is eccentric in the rotor (21), such that a central longitudinal axis of the key channel is offset from the rotor axis;
the rotor axis passes through the key channel;
a first row of mutually similarly shaped rotor pins (24) each having substantially coaxial tip and body for cooperation with the first row of coding recesses (2), and each being located at a predetermined axial Z-coding pin location along one of the side-faces of the key channel, and each being displaceable along the coding axis (C) of the key, wherein the coding axis (C) is inclined at a coding angle (α) to the plane of the key blade when the key blade (1) is inserted in the key channel;
each of the rotor pins (24) is length-coded to correspond to one of the predetermined coding recess geometries;
**characterised in that**:
the coding angle (α) is between 30° and 60°;
each of the rotor pins (24) is arranged such that it intersects a side-surface of the key channel at a Y-location on a side of the rotor axis remote from the central longitudinal axis of the inserted key blade, the pin being angled away from the said central longitudinal axis;
the cylinder lock further comprises a second row of rotor pins (24v, 24_{B}) for cooperation with a second row of coding recesses (2_{B}) of the key, the pins of the second row being angled in an opposite sense from the pins (24) of the first row with respect to the central longitudinal axis; and
each rotor pin (24, 24v, 24_{B}) is configured to cooperate with a respective recess (2, 2_{B}) such that all the second flanks (11) of the respective row of recesses (2, 2_{B}) are substantially mutually co-aligned in a plane containing the longitudinal axis (Z_{A}) parallel to the Z axis.

11. Cylinder lock according to claim 10, wherein the rotor pins (24) are arranged substantially radially with respect to the rotation axis of the rotor (21).

12. Method of coding a reversible key according to one of claims 1 to 9 with coding recesses (2) for cooperating with pins (24) of a cylinder lock according to one of claims 10 to 11, the coding axis C being in a plane substantially parallel to the X-Y plane, and the blade (1) comprising at least one coding region (12) in which coding recesses (2) can be formed, on each Y-Z face (7) of the blade (1), the method comprising:
forming, in at least one of the coding regions (12), a plurality of coding recesses (2, 3) of similar cross-sectional shape, hereafter referred to as the X-Y profile, and orientation in the X-Y plane and formed at predetermined Z-coding positions (Z₀ ... Z_{N}) along the Z direction, such that each of the plurality of coding recesses (2) is located at a different one of a plurality of predetermined C-positions (C₀ ... C_{N}) along a coding direction (C') which is parallel to the C axis,
**characterised in that**
the coding axis C is inclined at an angle (α) of between 25° and 70°, or preferably 30° and 60°, to the Y-Z plane, such that each of the C-positions (C₀ ... C_{N}) differs from the other ones of the predetermined C-positions by its position in the Y direction, hereafter referred to as its Y-position (Y₀ ... Y_{N}), wherein:
the X-Y profile of each recess comprises a first lateral flank (11), comprising a pin-contact region (6) for contact engagement with the tip of the corresponding pin of the cylinder lock, the first lateral flank meeting the blade face (7) at a first shoulder Y-position (9₀ ... 9_{N}), and a second lateral flank (10) which meets the blade face (7) at a second shoulder Y-position (9'₀ ... 9'_{N});
the coding recesses (2) are formed such that the coding position of each of the coding recesses differs from each of the other coding positions such that the first shoulder Y-position (9₀ ... 9_{N}) of said each coding recess (2) differs by a first difference amount from the first shoulder Y-position of said each other coding position;
the coding recesses (2) are formed such that the coding position of each recess differs from each of the other coding positions such that the second shoulder Y-position (9'₀ ... 9'_{N}) of said each recess differs by a second difference amount from the second shoulder Y-position of said each other coding position;
the coding recesses (2) are formed such that the second flanks (11) of the coding recess geometries of all the said plurality of coding recesses (2) are substantially mutually co-aligned in a plane containing the longitudinal axis (Z_{A}) parallel to the Z axis; and
the first difference amount is at least 50% greater than the second difference amount.

13. Method according to claim 12, wherein the forming of the coding recesses (2) comprises:
using a profiled machine tool (31) to form each of the coding recesses (2), the machine tool having a cutting profile corresponding to the predetermined coding profile of the coding recesses, and
at each of the said predetermined coding positions, displacing the cutting profile along the coding direction (C') to one of the predetermined coding positions.

14. Method according to claim 13, wherein the machine tool comprises a profiled milling wheel, and wherein the forming step is performed with the rotation axis of the milling wheel at a predetermined angle of between 25° and 70°, or preferably between 30° and 60°, to the Y-Z plane of the key blade (1).

15. Lock system comprising at least one cylinder lock (20) according to one of claims 10 to 11 and at least one key according to one of claims 1 to 9, the or each cylinder lock comprising the said row of rotor pins (24), and the or each key comprising the said plurality of recesses (2) each corresponding to one of the pins (24) of the row, wherein the or each of the said pins (2) is angled and positioned to engage with the first flank (10) of its corresponding recess (2) such that the coding of the pin and recess is determined by the length of the said angled rotor pin (24) and the location along the C-direction of the first flank (10).

## Patentansprüche

1. Flachblatt-Wendeschlüssel zum Einführen in einen Schlüsselkanal eines Zylinderschlosses (20) mit YZ-Flächen (7) des Schlüsselblatts (1) parallel zu den Seitenflächen des Schlüsselkanals, wobei das Schloss (20) eine Reihe von Rotorstiften (24) aufweist, die jeweils eine Spitze und einen Körper aufweisen, wobei die Spitze im Wesentlichen koaxial mit dem Körper liegt, und jeweils an einer vorbestimmten axialen Z-Kodierungsstiftposition entlang einer der Seitenflächen des Schlüsselkanals angeordnet sind und jeweils entlang einer Kodierungsachse (C) des Schlüssels verschiebbar sind, wobei die Kodierungsachse (C) in einem Kodierungswinkel (α) zur YZ-Fläche (7) geneigt ist, wenn das Schlüsselblatt (1) im Schlüsselkanal eingeführt ist;
wobei das Schlüsselblatt (1) eine Dickenachse X, eine Querachse Y und eine Längsachse Z aufweist, wobei die X-, Y- und Z-Achsen zueinander orthogonal sind und die YZ-Flächen im Wesentlichen parallel zur YZ-Ebene sind, welche die Y- und Z-Achsen enthält;
wobei das Blatt (1) mindestens eine erste Reihe von einer Mehrzahl von Kodierungsaussparungen (2) aufweist, die jeweils an einer vorbestimmten, einer der entlang der YZ-Fläche (7) des Blatts (1) liegenden Z-Kodierungsstiftpositionen entsprechenden Z-Kodierungsaussparungsstelle (Z₀, Z₁, Z₂, Z₃) ausgebildet sind;
wobei jede Kodierungsaussparung (2) eine von mehreren vorbestimmten, untereinander unterschiedlichen Kodierungsaussparungsgeometrien (2₁, 2₂, 2₃) aufweist, wobei jede Kodierungsaussparungsgeometrie einen Stiftberührungsoberflächenbereich umfasst, der nachstehend als Kontaktbereich (6) bezeichnet wird, zum kodierten Eingriff mit einem entsprechenden Stift der Stifte (24) des Zylinderschlosses (20), wobei jede Kodierungsaussparungsgeometrie durch einen Schaftfräser (3) mit einer ersten senkrecht zur Ebene des Blatts (1) stehenden Rotationsachse (R) oder durch einen mit einer zweiten Rotationsachse (R') parallel zur Ebene des Blatts (1) stehenden Seiten- und Planfräser (3') formbar ist, und wobei die Kontaktbereiche (6) der verschiedenen Kodierungsgeometrien sich an unterschiedlichen vorbestimmten C-Stellen entlang einer parallel zur Kodierungsachse (C) laufenden C-Richtung (C') befinden;
**dadurch gekennzeichnet, dass**
der Kodierungswinkel (α) zwischen 30° und 60° liegt,
jede der Kodierungsaussparungsgeometrien (2₁, 2₂, 2₃) ein Querschnittsprofil hat, welches eine erste, den Kontaktflächenbereich (6) enthaltende Flanke (10) aufweist, wobei der Kontaktbereich (6) in einem zweiten Winkel (γ) zwischen 30° und 60° zur Ebene des Blatts (1), und im Wesentlichen orthogonal zur Kodierungsachse (C) geneigt ist, und welches eine zweite Flanke (11) aufweist, die auf einer gegenüberliegenden Seite von der ersten Flanke liegt,
wobei die genannten Kodierungsaussparungsgeometrien (2₁, 2₂, 2₃) sich in der Breite entlang einer Querrichtung (Y) parallel zur Y-Achse und in der Tiefe entlang einer X-Richtung parallel zur X-Achse unterscheiden, so dass sich jede erste Flanke (10) der Kodierungsaussparungsprofile an einer anderen Querstelle befindet, und wobei die zweiten Flanken (11) der Kodierungsaussparungsgeometrien der gesamten Mehrzahl von Kodierungsaussparungen (2) im Wesentlichen gegenseitig in einer Ebene ausgerichtet sind, die eine Längsachse (Z_{A}) enthält, die parallel zur Z-Achse verläuft.

2. Schlüssel nach Anspruch 1, wobei die Kodierungsaussparungsgeometrie der genannten jeweiligen Kodierungsaussparung (2) so ausgebildet ist, dass eine zu ihrem Stiftberührungsbereich (6) tangentiale Ebene, nachstehend als Stiftkontaktebene bezeichnet, im Wesentlichen orthogonal zur Kodierungsachse (C) ist.

3. Schlüssel nach einem der Ansprüche 1 oder 2, wobei die Kodierungsaussparungsgeometrie der genannten jeder Kodierungsaussparung (2) so ausgebildet ist, dass eine zu ihrem Stiftkontaktbereich (6) tangentiale Ebene, nachstehend als Stiftkontaktebene bezeichnet,
im Wesentlichen parallel zur Y-Achse und nicht orthogonal zur C-Achse steht; oder
im Wesentlichen parallel zur YZ-Ebene steht; oder
so konfiguriert ist, dass ihr Stiftkontaktbereich (6) außerhalb der C-Achse angeordnet und für einen schrägen Kontakt mit dem genannten entsprechenden Stift (24) abgewinkelt ist.

4. Schlüssel nach einem der vorhergehenden Ansprüche, wobei die Reihe Kodierungsaussparungen (2) umfasst, die mindestens zwei oder vorzugsweise mindestens drei verschiedene der Kodierungsaussparungsgeometrien aufweisen.

5. Schlüssel nach einem der vorhergehenden Ansprüche, ferner umfassend eine längliche Aussparung (40), die als Tal bezeichnet wird, welche einen V-förmigen Querschnitt aufweist und sich entlang der Längsachse des Blatts (1) erstreckt, wobei das Tal mindestens eine im Wesentlichen flache Kodierungsfläche (41, 41') umfasst, die als Talflanke bezeichnet wird und zwischen 10° und 30° oder vorzugsweise zwischen 15° und 22° zur YZ-Ebene des Schlüsselblatts (1) geneigt ist.

6. Schlüssel nach einem der vorhergehenden Ansprüche, wobei eine oder mehrere der Kodierungsaussparungen der Reihe einen kreisförmigen YZ-Querschnitt haben.

7. Schlüssel nach einem der vorhergehenden Ansprüche, wobei eine oder mehrere der Kodierungsaussparungen der Reihe einen länglichen YZ-Querschnitt aufweisen, der durch eine Y- oder Z-Verschiebung des genannten Schaftfräsers (4) oder des genannten Seiten- und Planfräsers (4') formbar sind.

8. Schlüssel nach einem der vorhergehenden Ansprüche, wobei mindestens zwei oder vorzugsweise alle der Kodierungsaussparungen der Reihe als Teile einer kontinuierlichen Kodierungsaussparung (15) ausgebildet sind, die sich in Längsrichtung entlang der YZ-Fläche (7) erstrecken.

9. Schlüssel nach einem der vorhergehenden Ansprüche, wobei jede YZ-Fläche (7) ferner eine zweite Reihe von zweiten Kodierungsaussparungen (42, 2_{B}) umfasst, wobei jede der zweiten Kodierungsaussparungen eine von einer zweiten vorbestimmten Mehrzahl von zweiten Kodierungsaussparungsgeometrien aufweist, wobei die zweite Geometrien entlang einer zweiten Kodierungsachse (C_{B}) kodiert sind, die eine entgegengesetzte Neigung zum Winkel (α) der Kodierungsachse (C_{A}) der Aussparungsgeometrien der ersten Reihe mit Bezug auf der XY-Ebene aufweist.

10. Zylinderschloss für einen Flachblatt-Wendeschlüssel nach einem der vorhergehenden Ansprüche, wobei das Schloss einen Rotor (21) umfasst, der in einem Stator (22) um eine Rotorachse drehbar ist, wobei der Rotor (21) einen Schlüsselkanal zum Empfangen des Schlüsselblatts (1) aufweist, wobei der Schlüsselkanal Seitenflächen parallel zur YZ-Ebene des Schlüsselblatts aufweist, wenn das Schlüsselblatt (1) im Schlüsselkanal eingeführt ist; wobei
der Schlüsselkanal im Rotor (21) exzentrisch ist, so dass eine zentrale Längsachse des Schlüsselkanals von der Rotorachse versetzt ist;
die Rotorachse durch den Schlüsselkanal verläuft;
eine erste Reihe zueinander ähnlich geformter Rotorstifte (24), die jeweils Spitze und Körper im Wesentlichen koaxial miteinander aufweisen und sich jeweils an einer vorbestimmten axialen Z-Kodierungsstiftposition entlang einer der Seitenflächen des Schlüsselkanals befinden und jeweils entlang der Kodierungsachse (C) des Schlüssels verschiebbar sind, wobei die Kodierungsachse (C) in einem Kodierungswinkel (α) zur YZ-Ebene des Schlüsselblatts geneigt ist, wenn das Schlüsselblatt (1) im Schlüsselkanal eingeführt ist;
jeder der Rotorstifte (24) längenkodiert ist, um einer der vorbestimmten Kodierungsaussparungsgeometrien zu entsprechen,
**dadurch gekennzeichnet, dass**
der Kodierungswinkel (α) zwischen 30° und 60° liegt;
jeder der Rotorstifte (24) so angeordnet ist, dass er eine Seitenfläche des Schlüsselkanals an einer Y-Stelle auf einer Seite der Rotorachse schneidet, die von der zentralen Längsachse des eingeführten Schlüsselblatts entfernt ist, wobei der Stift von der zentralen Längsachse abgewinkelt ist;
das Zylinderschloss ferner eine zweite Reihe von Rotorstiften (24_{V}, 24_{B}) zur Kooperation mit einer zweiten Reihe von Kodierungsaussparungen (2_{B}) des Schlüssels umfasst, wobei die Stifte der zweiten Reihe in einem entgegengesetzten Sinne von den Stiften (24) der ersten Reihe abgewinkelt sind in Bezug auf die zentrale Längsachse;
jeder Rotorstift (24, 24v, 24_{B}) so konfiguriert ist, dass er mit einer entsprechenden Aussparung (2, 2_{B}) zusammenwirkt, so dass alle zweiten Flanken (11) der jeweiligen Reihe von Aussparungen (2, 2_{B}) im Wesentlichen zueinander in einer Ebene ausgerichtet sind, die die Längsachse (Z_{A}) parallel zur Z-Achse enthält.

11. Zylinderschloss nach Anspruch 10, wobei die Rotorstifte (24) im Wesentlichen radial in Bezug auf die Rotationsachse des Rotors (21) angeordnet sind.

12. Verfahren zum Kodieren eines Wendeschlüssels nach einem der Ansprüche 1 bis 9 mit Kodierungsaussparungen (2) zur Kooperation mit Stiften (24) eines Zylinderschlosses nach einem der Ansprüche 10 bis 11, wobei sich die Kodierungsachse C in einer Ebene befindet im Wesentlichen parallel zur XY-Ebene, und das Blatt (1) mindestens einen Kodierungsbereich (12), in dem Kodierungsaussparungen (2) formbar sind, auf jeder YZ-Fläche (7) des Blatts (1) aufweist, wobei das Verfahren umfasst:
Bilden in mindestens einem der Kodierungsbereiche (12) eine Mehrzahl von Kodierungsaussparungen (2, 3) ähnlicher Querschnittsform in der XY-Ebene, nachstehend als XY-Profil bezeichnet, und an vorbestimmten Z-Kodierungspositionen (Z₀ ... Z_{N}) entlang der Z-Richtung gebildet, so dass sich jede der mehreren Kodierungsaussparungen (2) an einer anderen von mehreren vorbestimmten C-Positionen (C₀ ... C_{N}) entlang einer Kodierungsrichtung (C'), die parallel zur C-Achse ist,
**dadurch gekennzeichnet, dass**
die Kodierungsachse C an einem Winkel (α) zwischen 25° und 70°, oder vorzugsweise 30° und 60° zur YZ-Ebene steht, so dass sich jede der C-Positionen (C₀ ... C_{N}) von den anderen der vorbestimmten C-Positionen durch ihre Position in der Y-Richtung, im Folgenden als ihre Y-Position (Y₀ ... Y_{N}) bezeichnet, unterscheidet, wobei:
das XY-Profil jeder Aussparung eine erste seitliche Flanke (11) aufweist, die einen Stiftkontaktbereich (6) zum Kontakteingriff mit der Spitze des entsprechenden Stifts des Zylinderschlosses aufweist, wobei die erste seitliche Flanke an einer ersten Schulter-Y-Position (9₀ ... 9_{N}) auf die Blattfläche (7) trifft, und eine zweite seitliche Flanke (10), die auf die Blattfläche trifft (7) an einer zweiten Schulter-Y-Position (9'₀ ... 9'_{N});
die Kodierungsaussparungen (2) so ausgebildet sind, dass sich die Kodierungsposition jeder Kodierungsaussparung von jeder der anderen Kodierungspositionen unterscheidet, so dass sich die erste Schulter-Y-Position (9₀ ... 9_{N}) der einzelnen Kodierungsaussparungen (2) um einen ersten Differenzbetrag von der ersten Schulter-Y-Position der jeweils anderen Kodierungsposition unterscheidet;
die Kodierungsaussparungen so ausgebildet sind, dass sich die Kodierungsposition jeder Aussparung von jeder der anderen Kodierungspositionen unterscheidet, so dass sich die zweite Schulter-Y-Position (9'₀ ... 9'_{N}) der genannten jeder Aussparung um einen zweiten Differenzbetrag von der zweiten Schulter-Y-Position der jeweils anderen Kodierungsposition unterscheidet;
die Kodierungsaussparungen (2) so ausgebildet sind, dass die zweiten Flanken (11) der Kodierungsaussparungsgeometrien aller genannten Vielzahl von Kodierungsaussparungen (2) im Wesentlichen zueinander in einer Ebene ausgerichtet sind, die die Längsachse (Za) parallel zur Z-Achse enthält; und
der erste Differenzbetrag mindestens 50% grösser ist als der zweite Differenzbetrag.

13. Verfahren nach Anspruch 12, wobei das Formen der Kodierungsaussparungen (2) umfasst:
Verwenden einer profilierten Werkzeugmaschine (31) zum Bilden jeder der Kodierungsaussparungen (2), wobei die Werkzeugmaschine ein Schneidprofil aufweist, das dem vorbestimmten Kodierungsprofil der Kodierungsaussparungen entspricht, und
an jeder der vorbestimmten Kodierungspositionen Verschieben des Schneidprofils entlang der Kodierungsrichtung (C') zu einer der vorbestimmten Kodierungspositionen.

14. Verfahren nach Anspruch 13, wobei die Werkzeugmaschine ein profiliertes Fräsrad aufweist und wobei der Bildungsschritt mit der Drehachse des Fräsrades in einem vorbestimmten Winkel zwischen 25° und 70°, oder vorzugsweise zwischen 30° und 60° zur YZ-Ebene des Schlüsselblatts (1) durchgeführt wird.

15. Schliesssystem mit mindestens einem Zylinderschloss (20) nach einem der Ansprüche 10 bis 11 und mindestens einem Schlüssel nach einem der Ansprüche 1 bis 9, wobei das oder jedes Zylinderschloss die genannte Reihe der Rotorstifte (24) aufweist, und der oder jeder Schlüssel, der die genannte Mehrzahl von Aussparungen (2) aufweist, die jeweils einem der Stifte (24) der Reihe entsprechen, wobei der oder jeder der genannten Stifte (2) abgewinkelt und positioniert entlang der Z-Achse ist, um mit der ersten Flanke seiner entsprechenden Aussparung (2) in Eingriff zu kommen (10), so dass die Kodierung des Stifts und der Aussparung durch die Länge des abgewinkelten Rotorstifts (24) und die Position der ersten Flanke (10) entlang der C-Richtung bestimmt ist.

## Revendications

1. Clé plate réversible destinée à être insérée dans un canal de clé d'une serrure à cylindre (20) avec des faces Y-Z (7) de la lame de clé (1) parallèles aux surfaces latérales du canal de clé, la serrure (20) comportant une rangée de broches de rotor (24) de formes mutuellement similaires, chacune ayant une pointe et un corps sensiblement coaxiaux, et chacune étant située à un emplacement de broche de codage Z axial prédéterminé le long d'une des faces latérales du canal de clé, et chacune étant déplaçable le long d'un axe de codage (C) de la clé, l'axe de codage (C) étant incliné à un angle de codage (α) par rapport à ladite face X-Y (7) lorsque la lame de clé (1) est insérée dans le canal de clé ;
la lame de clé (1) comportant un axe d'épaisseur X, un axe transversal Y et un axe longitudinal Z, les axes X, Y et Z étant mutuellement orthogonaux et les surfaces Y-Z étant sensiblement parallèles au plan Y-Z contenant les axes Y et Z ;
la lame (1) comprenant au moins une première rangée d'une pluralité de premiers évidements de codage (2) formés chacun à un emplacement d'évidement de codage Z prédéterminé (Z₀, Z₁, Z₂, Z₃), le long de la surface Y-Z (7) de la lame (1), correspondant à l'un des emplacements de broche de codage Z ;
chaque évidement de codage (2) comportant l'une d'une première pluralité de premières géométries d'évidement de codage prédéterminées mutuellement différentes (2₁, 2₂, 2₃), chaque géométrie d'évidement de codage comprenant une région de surface de contact de broche, appelée ci-après région de contact (6), pour un engagement de contact codé avec une broche correspondante parmi les broches (24) de la serrure à cylindre (20), chaque géométrie d'évidement de codage pouvant être formée par une fraise de type fraise à extrémité (3) comportant un premier axe de rotation (R) orthogonal au plan de la lame (1), ou par une fraise de type fraise à face et côté (3') comportant un second axe de rotation (R') parallèle au plan de la lame (1), et dans laquelle les régions de contact (6) des différentes géométries de codage étant situées à différents emplacements C prédéterminés le long d'une direction C (C') parallèle à l'axe de codage (C) ;
**caractérisée en ce que**
l'angle de codage (α) est compris entre 30° et 60°,
chacune des géométries d'évidement de codage (2₁, 2₂, 2₃) présente un profil de section transversale comprenant un premier flanc (10) contenant la région de surface de contact (6), de telle sorte que la région de contact (6) est inclinée selon un second angle (γ) compris entre 30° et 60°, par rapport au plan de la lame, sensiblement orthogonal à l'axe de codage (C), et un second flanc (11), sur un côté opposé de l'évidement sur une largeur de l'évidement à partir du premier flanc, et
dans laquelle lesdites géométries d'évidement de codage (2₁, 2₂, 2₃) diffèrent en largeur le long d'une direction transversale (Y), parallèle à l'axe Y, et en profondeur le long d'une direction X, parallèle à l'axe X, de telle sorte que le premier flanc (10) de chaque forme d'évidement de codage se trouve à un emplacement transversal différent, et de telle sorte que les seconds flancs (11) des géométries d'évidement de codage de toute ladite pluralité d'évidements de codage (2) sont sensiblement mutuellement co-alignés dans un plan contenant un axe longitudinal (Z_{A}) parallèle à l'axe Z.

2. Clé selon la revendication 1, dans laquelle la géométrie de l'évidement de codage de chaque évidement de codage (2) est formée de telle sorte qu'un plan tangent à sa région de contact de broche (6), appelé ci-après plan de contact de broche, soit sensiblement perpendiculaire à l'axe de codage (C).

3. Clé selon l'une des revendications 1 ou 2, dans laquelle la géométrie de l'évidement de codage de chaque évidement de codage (2) est formée de telle sorte qu'un plan tangentiel à sa région de contact de broche (6), appelé ci-après plan de contact de broche, soit
sensiblement parallèle à l'axe Y et non perpendiculaire à l'axe C ; ou
sensiblement parallèle au plan Y-Z ; ou
configuré de telle sorte que sa région de contact de broche (6) soit située hors de l'axe C et inclinée pour un contact oblique avec ladite broche correspondante (24).

4. Clé selon l'une des revendications précédentes, dans laquelle la rangée comprend des évidements de codage (2) présentant au moins deux, ou de préférence au moins trois, géométries différentes desdites évidements de codage.

5. Clé selon l'une des revendications précédentes, comprenant en outre une concavité longitudinale (40), dite vallée, présentant une section transversale en V peu profonde et s'étendant selon l'axe longitudinal de la lame (1), la vallée comprenant au moins une surface de codage (41, 41') sensiblement plane, dite flanc de vallée, inclinée entre 10° et 30°, ou de préférence entre 15° et 22°, par rapport au plan Y-Z de la lame (1).

6. Clé selon l'une des revendications précédentes, dans laquelle un ou plusieurs des évidements de codage de la rangée présentent une section transversale Y-Z circulaire.

7. Clé selon l'une des revendications précédentes, dans laquelle un ou plusieurs des évidements de codage de la rangée présentent une section transversale Y-Z allongée formable par un déplacement en Y ou en Z dudit outil de coupe d'extrémité (4) ou de coupe face et côté (4').

8. Clé selon l'une des revendications précédentes, dans laquelle au moins deux, ou de préférence tous, desdits évidements de codage de ladite rangée sont formés comme des portions d'un évidement de codage continu (15) s'étendant longitudinalement le long de la face Y-Z (7).

9. Clé selon l'une des revendications précédentes, dans laquelle chaque face Y-Z (7) comprend en outre une seconde rangée de seconds évidements de codage (42, 2_{B}), dans laquelle chacun des seconds évidements de codage présente une d'une seconde pluralité de secondes géométries d'évidement de codage prédéterminées, dans laquelle les secondes géométries sont codées le long d'un second axe de codage (C_{B}) ayant une inclinaison opposée à l'angle (α) de l'axe de codage (C_{A}) des géométries d'évidement de la première rangée par rapport au plan X-Y.

10. Serrure à cylindre pour une clé plate réversible selon l'une des revendications précédentes, la serrure comprenant un rotor (21) pouvant tourner dans un stator (22) autour d'un axe de rotor, dans laquelle le rotor (21) comprend un canal de clé pour recevoir la lame de clé (1), le canal de clé ayant des surfaces latérales parallèles au plan X-Z de la lame de clé lorsque la lame (1) est insérée dans le canal de clé, dans laquelle :
le canal de clé est excentré dans le rotor (21), de telle sorte qu'un axe longitudinal central du canal de clé est décalé par rapport à l'axe du rotor ;
l'axe du rotor passe par le canal de la clé ;
une première rangée de broches de rotor de forme mutuellement similaire (24), chacune ayant une pointe et un corps sensiblement coaxiaux, et chacune étant située à un emplacement de broche de codage Z axial prédéterminé le long d'une des faces latérales du canal de clé, et chacune étant déplaçable le long de l'axe de codage (C) de la clé, l'axe de codage (C) étant incliné à un angle de codage (α) par rapport au plan de la lame de clé lorsque la lame de clé (1) est insérée dans le canal de clé ;
chacune des broches de rotor (24) est codée en longueur pour correspondre à l'une des géométries d'évidement de codage prédéterminées ;
**caractérisé en ce que** ;
l'angle de codage (α) est compris entre 30° et 60° ;
chacune des broches de rotor (24) est disposée de telle sorte qu'elle coupe une surface latérale du canal de clé à un emplacement Y sur un côté de l'axe du rotor éloigné de l'axe longitudinal central de la lame de clé insérée, la broche étant inclinée à l'opposé dudit axe longitudinal central ;
la serrure à cylindre comprenant en outre une seconde rangée de broches de rotor (24v, 24_{B}) destinées à coopérer avec une seconde rangée d'évidements de codage (2_{B}) de la clé, les broches de la seconde rangée étant inclinées dans un sens opposé aux broches (24) de la première rangée par rapport à l'axe longitudinal central ;
chaque broche de rotor (24, 24v, 24_{B}) est configurée pour coopérer avec un évidement respectif (2, 2_{B}) tel que tous les seconds flancs (11) de la rangée respective d'évidements (2, 2_{B}) sont sensiblement mutuellement co-aligné dans un plan contenant l'axe longitudinal (Z_{A}) parallèle à l'axe Z.

11. Serrure à cylindre selon la revendication 10, dans laquelle les axes de rotor (24) sont disposés sensiblement radialement par rapport à l'axe de rotation du rotor (21).

12. Procédé de codage d'une clé réversible selon l'une des revendications 1 à 9 avec des évidements de codage (2) destinés à coopérer avec des broches (24) d'une serrure à cylindre selon l'une des revendications 10 à 11, l'axe de codage C étant dans un plan sensiblement parallèle au plan X-Y, et la lame (1) comportant au moins une zone de codage (12) dans laquelle des évidements de codage (2) peuvent être formés, sur chaque face Y-Z (7) de la lame (1), le procédé comprenant ;
former, dans au moins une des régions de codage (12), une pluralité d'évidements de codage (2, 3) de forme de section transversale similaire, appelés ci-après profil X-Y, et d'orientation dans le plan X-Y et formés à des positions de codage Z prédéterminées (Z₀ ... Z_{N}) le long de la direction Z, de telle sorte que chacune de la pluralité d'évidements de codage (2) soit située à une position C différente parmi une pluralité de positions C prédéterminées (C₀ ... C_{N}) selon une direction de codage (C') qui est parallèle à l'axe C,
**caractérisé en ce que**
l'axe de codage C est incliné d'un angle (α) compris entre 25° et 70°, ou de préférence 30° et 60°, par rapport au plan Y-Z, de telle sorte que chacune des positions C (C₀ ... C_{N}) diffère des autres positions C prédéterminées par sa position dans la direction Y, appelée ci-après sa position Y (Y₀ ... Y_{N}), dans lequel :
le profil X-Y de chaque évidement comprend un premier flanc latéral (11), comprenant une région de contact de broche (6) pour un engagement de contact avec la pointe de la broche correspondante de la serrure à cylindre, le premier flanc latéral rencontrant la face de la lame (7) au niveau d'une première position Y d'épaulement (9₀ ... 9_{N}), et un second flanc latéral (10) qui rencontre la face de la lame (7) au niveau d'une seconde position d'épaulement Y (9'₀ ... 9'_{N}) ;
les évidements de codage (2) sont formés de telle sorte que la position de codage de chacun des évidements de codage diffère de chacune des autres positions de codage de telle sorte que la première position Y de l'épaulement (9₀ ... 9_{N}) de chaque évidement de codage (2) diffère d'une première quantité de différence de la première position Y de l'épaulement de chaque autre position de codage ;
les évidements de codage sont formés de telle sorte que la position de codage de chaque évidement diffère de chacune des autres positions de codage de telle sorte que la seconde position Y de l'épaulement (9'₀ ... 9'_{N}) de chaque évidement diffère d'une seconde quantité de différence de la seconde position Y de l'épaulement de chaque autre position de codage ; et
les évidements de codage (2) sont formés de telle sorte que les seconds flancs (11) de l'évidement de codage des géométries de toute ladite pluralité d'évidements de codage (2) sont sensiblement mutuellement co-alignées de manière dans un plan contenant l'axe longitudinal (Z_{A}) parallèle à l'axe Z ; et
la quantité de la première différence est au moins 50% supérieur à la quantité de la seconde différence.

13. Procédé selon la revendication 12, dans lequel la formation des évidements de codage (2) comprend :
utiliser une machine-outil profilée (31) pour former chacun des évidements de codage (2), la machine-outil ayant un profil de coupe correspondant au profil de codage prédéterminé des évidements de codage, et
à chacune desdites positions de codage prédéterminées, déplacer le profil de coupe le long de la direction de codage (C') vers l'une des positions de codage prédéterminées.

14. Procédé selon la revendication 14, dans lequel la machine-outil comprend une meule profilée, et dans lequel l'étape de formage est réalisée avec l'axe de rotation de la meule à un angle prédéterminé compris entre 25° et 70°, ou de préférence entre 30° et 60°, par rapport au plan Y-Z de la lame de clé (1).

15. Système de serrure comprenant au moins une serrure à cylindre (20) selon l'une des revendications 10 à 11 et au moins une clé selon l'une des revendications 1 à 9, la ou chaque serrure à cylindre comprenant ladite rangée de broches de rotor (24), et la ou chaque clé comprenant ladite pluralité d'évidements (2) correspondant chacun à l'une des broches (24) de la rangée, dans lequel la ou chacune desdites broches (2) est inclinée et positionnée pour s'engager avec le premier flanc (10) de son évidement (2) correspondant de telle sorte que le codage de la broche et de l'évidement est déterminé par la longueur de ladite broche de rotor inclinée (24) et l'emplacement le long de la direction C du premier flanc (10).
